(19) Europäisches Patentamt
European Patent Office
Office européen des brevets

(11) Publication number: 0 007 660 A1

# (12) EUROPEAN PATENT APPLICATION

(21) Application number: 79200373.3

(22) Date of filing: 06.07.79

(51) Int. Cl.³: G 06 K 17/00
G 06 K 19/00, G 06 F 15/20

(30) Priority: 07.07.78 US 922798
31.10.78 US 956426

(43) Date of publication of application: 06.02.80 Bulletin 80/3

(84) Designated Contracting States: AT BE CH DE FR GB IT LU NL SE

(71) Applicant: News Log International Inc.
127 Harmony Lane
Whitewater, Wisconsin 53190(US)

(72) Inventor: Gokey, Phillips E.
Lima Center Road Route 1
Whitewater, Wisconsin(US)

(72) Inventor: Hurlbut, Donovan W.
Route 1
Whitewater, Wisconsin(US)

(72) Inventor: Sederholm, Emma Lou
516 South Elizabeth Street
Whitewater, Wisconsin(US)

(72) Inventor: Terry, Angel F.
Route 1
Whitewater, Wisconsin(US)

(74) Representative: Hoijtink, Reinoud et al,
Sweelinckplein 1
NL-2517 GK The Hague(NL)

## (54) A microfiche information retrieval and control system utilizing machine readable microfiche and visually readable microfiche.

(57) A parts management and inventory control system includes a microfiche data base (11) of two types of microfiche cards. One type is machine readable only, while the other type card bears machine readable information and visually readable information. The microfiche cards bear digital information for machine reading. The digital information includes information to be read as output data and/or information for controlling a microfiche card transport or a scanner transport in order to accurately position microfiche cards for information retrieval. The system may interface with a central computer (19) for parts ordering, cancellation and the like, and a printer (14) provides a permanent business record. The system may also be employed in the filed of finance in order to provide credit or bank account information with complete privacy with respect to the identification of the person whose account is being checked.

../...

EP 0 007 660 A1

Fig. 1

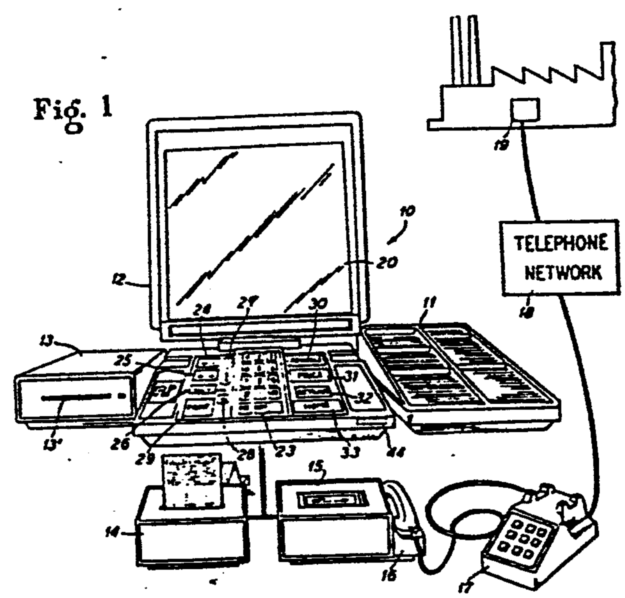

# DESCRIPTION

"A Microfiche Information Retrieval and Control System Utilizing Machine Readable Microfiche and Visually Readable Microfiche"

## Field of the Invention

This invention relates to microfiche information retrieval techniques, and is more particularly concerned with the provision and retrieval of digital information on a microfiche card, which information is to be retrieved for data processing purposes in, for example, a parts management and inventory control system or in an accounts management and checking system.

## Description of the Prior Art

It is well known in the art to provide control information on reel or cartridge or microfilm to identify frames along the length of the microfilm. This information may be in the form of alphanumeric characters which are visually read on a trial and error basis until the desired frame is properly positioned for reading in a viewer. It is also well known in the art to place control information along the edge of a strip of microfilm to be read by an optical scanner in order to place a desired frame within the viewing field of a viewer. It is also known in the art to mechanically address and position a microfiche transport, on an x-y basis, in order to register a desired frame of information within the viewing field of a viewer; however, mechanical techniques are expensive, and the expense increases with increased accuracy of registration.

With respect to microfiche cards used in parts management and inventory control systems, such as may be used in the retail, automotive and farm equipment industries, or accounts, credit check and signature card systems in the banking industry, a card is placed on an x-y transport, generally manually operated, and the desired frame is obtained, again by a trial and error method through repeated repositionings of the card until the desired frame appears on the viewer.

Heretofore, microfiche cards have been limited to providing, in conjunction with parts catalogues and the like, visually readable graphic illustrations and/or alphanumeric information, such as generally found in retail catalogue and parts ordering systems.

To generally sum up the state of the art, alphanumeric and digital codes have been provided on reel-type microfilm for visual or electronic observation, while microfiche cards have been provided with visual indicators to identify the position of a frame within a matrix of frames on a card.

The primary object of the present invention is to provide a management system for parts and accounts information retrieval.

A more specific object of the invention is to provide a microfiche information retrieval system which utilizes a data base which is easily and inexpensively up-dated.

Another specific object of the invention is to provide a new and improved parts management and inventory control system.

Another specific object of the invention is to provide a new and improved bank and credit account information checking system.

According to the invention, two basic types of cut microfiche, hereinafter simply called microfiche or microfiche cards, are provided as a data base. One type of microfiche card, called a "viewer microfiche", bears graphic information and digital information, the differences between such information being discussed below. In a parts management and inventory control system two types of viewer microfiche are provided:

(1) A "parts" microfiche which bears graphic information concerning parts, such as an exploded view of a pump or the like, and parts identification and location information; and

(2) A "master" microfiche which bears the manufacturer's part numbers and related system locator numbers.

The second type of microfiche is a totally digital microfiche which bears machine readable codes. More specifically, in a parts management and inventory control system (PMIC) the second type of microfiche is called a "price" microfiche and bears digital codes which indicate manufacturer's part number, locator number, current price and if the part is presently in stock.

The locator number may serve two purposes:

(1) Identify the correct price microfiche and provide an address for the information concerning the part being investigated; and

(2) Provide a physical location of the part in the dealer's warehouse.

The PMIC system and related banking and retail catalogue systems are based upon a concept having the following features:

(1) Microfiche cards bear digital information which may be of several types and may be employed in conjunction with graphic information;

(2) The digital information on a microfiche card may be employed in conjunction with an optical scanner for locating a certain area on the card, which area may contain digital or graphic information;

(3) The microfiche card, in conjunction with a scanner, locates a desired area to be scanned and adjusts the scanner or card transport, if necessary, with respect to skew so that the scanner and the information to be read are in accurate alignment; and

(4) Apparatus is provided for accurately locating a microfiche card with respect to a scanner, including structure for controlling operation of the scanner so as to detect positioning marks on the card which, after positioning, control the position of the card and/or scanner transport.

A microfiche card generally includes a header and a body. The header usually bears some type of text which identifies the card and its general content, while the body of the card bears the information sought to be retrieved. As has been indicated above, and as will be more fully appreciated from the detailed discussions below, the information to be retrieved may be graphic information or, according to the present invention, digital information.

More specifically, in a PMIC system, a master microfiche has a header comprising a sequential range of manufacturer part numbers and the body of the microfiche comprises the individual part numbers and the respective corresponding system locator numbers. The locator numbers may denote physical stock locations, as well as serve the primary function of identifying the corresponding price microfiche and addresses of the price microfiche inventory and price information.

A parts microfiche has a header which carries manufacturer model and part numbers, while the body bears graphic information concerning the parts, manufacturer part number, general descriptions of the parts, and corresponding locator numbers.

The price microfiche bears a price microfiche number on the header, while manufacturer number information and current sale price are carried on the body portion of the microfiche.

In banking and credit check applications, as will be understood from the detailed description below, a digital microfiche (corresponding to a PMIC price microfiche) may include account information in a machine readable form only, and may be accessed by appropriate addressing, such as by bank or credit card account number, and provide an account check in complete privacy from all persons, including the clerk or teller, as the case may be, who is seeking such information.

It should be noted that, as used herein, "digital information" is generally meant to identify marks, either opaque-on-clear or clear-on-opaque, while the term "graphic information" is generally meant to identify all other forms of information including alphanumeric information, drawings and the like. Also, contrasting colors may be used for digital and/or graphic information when such display is desired, such as for example in television applications.

In the context of a parts management and inventory control system, the present invention may advantageously be embodied in a system which comprises the aforementioned master, parts and price microfiche and apparatus for retrieving the information stored on such microfiche. In such a system, a viewer microfiche (master of parts) is positioned in a viewer, addressed and read to find a pertinent locator number which is assigned to a part being investigated. The locator number includes a price microfiche identification number to identify the pertinent price microfiche. The price microfiche is selected and placed in a scanner. Then, the locator number is keyed into the system to cause the scanner to access the price inventory information concerning that particular part. Finally, upon command, the price and inventory information is displayed by means of, for example, a light emitting diode (LED) display unit. If a sale or parts order is made, the system is provided with a printer for making a permanent record of the transaction and, in the case of an order, or a cancellation due to newly-received previously ordered parts, the transaction information is stored, at least on a temporary basis, for later communication to a central parts management computer. Such storage may advantageously be made with a magnetic tape unit and communicate to the central computer by way of the commercial telephone network by utilizing either a modulator-demodulator (MODEM) unit or a coder-decoder (CODEC) arrangement. All digital inter-unit and inter-network transmission may be accomplished with a specific digital code, such as the ASCII code.

A price microfiche, also called a "scanner" microfiche is intended to define a convenient, read-only, transportable, filable, data base constructed in standard microfiche form. The microfiche may bear written, graphic, audio or other information. The scanner microfiche may carry the information in digital or analog form and can be read with a scanner, transformed electronically to any desirable form, and can be displayed or used in any desired manner, or can be read with a TV camera and processed as a standard TV picture of signals. When the scanner microfiche is employed to provide data for another machine, (such as a computer) to accept and store, the entire microfiche may contain data only, an incremental encoding, as disclosed below, is not needed, except perhaps for initial alignment or periodic alignment purposes. A viewer microfiche is also a convenient, read-only, transportable, filable, data base in standard microfiche form. The information content may be written, graphic, audio, or other information. In contrast to the scanner microfiche, however, it is intended that the viewer microfiche have the information to be retrieved by projection onto a viewing screen.

With respect to the scanner microfiche, by using CON techniques, the present invention utilizes the possibility of generating, "printing" and distributing digital information at less expense and at greater speed than heretofore known. A particular advantage of all the microfiche cards used in the present invention is that information may be distributed, and updated, by mail, on an inexpensive basis, to provide a current inexpensive data base.

Other objects, features and advantages of the invention, its organization, construction and operation will be best understood from the following detailed description, taken in conjunction with the accompanying drawings, on which:

FIG. 1 is a schematic pictorial representation of a parts management and inventory control system constructed in accordance with the present invention;

FIG. 1A is a fragmentary view of the digital display of the apparatus of FIG. 1, shown in greater detail;

FIG. 1B is a schematic representation of the scanner as applied to bank account and credit account status checking;

FIG. 1C is a schematic representation of a scanner as a part of a computer for programming the computer;

FIG. 2 is a fragmentary view of a portion of a master (viewer-type) microfiche;

FIG. 3 is a fragmentary view of a portion of a parts (viewer-type) microfiche;

FIG. 4 is a plan view of a portion of a digitized scanner (price) microfiche which is illustrated in FIG. 5, the information illustrated thereon being hand-generated digital information;

FIG. 6 illustrates a portion of another scanner (price) microfiche, similar to that illustrated in FIG. 5, on which the digital information is COM-generated information;

FIG. 7 is a schematic block diagram of a system for aligning and reading a microfiche card of the type illustrated in FIGS. 4-6, with a scanner sensor;

FIG. 8 is a plan view of a portion of a viewer microfiche card which has alignment and locating tracks in the grid between the viewable information frames;

FIGS. 9-11 illustrate scanning, alignment and frame-finding techniques which may be employed in conjunction with the viewer microfiche card of FIG. 8, including proper tracking, frame centering and frame cornering;

FIG. 12 illustrates the use of auxiliary codes on a viewer microfiche card;

FIG. 13 illustrates the use of redundant auxiliary codes on a viewer microfiche card; and

FIG. 14 is a schematic block diagram of a system for transporting and accurately positioning a viewer microfiche card for subsequent viewing, and for controlling and reading a scanner (price) microfiche.

Inasmuch as a plurality of different aspects of the invention are discussed below for accurately aligning and reading microfiche cards, these techniques will be discussed separately in accordance with the following outline:

- I. GENERAL SYSTEMS CONCEPTS
  - A. PMIC Systems Concepts
  - B. Banking and Credit Check Systems Concepts
- II. SCANNER MICROFICHE
  - A. Control Data and Output Data
  - B. Reading Scanner Microfiche
- III. VIEWER MICROFICHE
  - A. Tracking
  - B. Stop At Frame Center
  - C. Stop At Frame Corner

D. Auxiliary Codes

E. Reading Viewer Microfiche

F. Exemplary Program

IV. COMBINED DIGITIZED AND VIEWER MICROFICHE INFORMATION RETRIEVAL

A. Parts Management and Inventory Control Example

V. SINGLE MICROFICHE CONTROL SYSTEMS

A. Banking and Credit Check Examples

B. TV Applications

C. Computer Program

# I. GENERAL SYSTEMS CONCEPTS

## A. PMIC Systems Concepts

The PMIC system was designed with an overall view of improving product or parts management and inventory control. More specifically, the PMIC system services seven areas which are critical to efficient parts management and inventory control, namely:

(1) parts are identified;

(2) prices are found rapidly;

(3) parts are retrieved quickly from stock with bin numbers provided by the system;

(4) records are made of the day's transactions;

(5) parts are ordered from a central location, preferably via a central computer;

(6) orders are fulfilled; and

(7) critical information such as availability, substitution and price change are kept up-to-date.

The importance of each of these areas becomes readily apparent when one considers the fact that a customer must be quickly serviced, the dealer must have complete records of his sales, orders and inventory, as well as up-to-date price and substitution information, and the central warehouse must be provided, not only with orders, but also with the fact that orders have been received and should not be carried as back-ordered parts.

## B. Banking and Credit Check Systems Concepts

A customer's account may be checked, upon the presentation of a personal check or credit card, for example, by utilizing the account number to address a digitized scanner microfiche. The information read from the fiche may readily be converted into alphanumeric account identification and account status information and displayed on a LED unit, with complete privacy as to the name of the customer. In this manner, rapid credit checks can be made through the simple use of digitized microfiche cards, and a scanner which has an input keyboard and an output display unit. It is also possible to place bank account signature cards on viewer microfiche and key in the customer's account number so as to compare an endorsement on a withdrawal slip, for example, with the signature of the customer as seen on the viewer.

Information as to the scanner microfiche, the viewer microfiche and information relating to proper alignment, addressing and tracking, is provided immediately below so as to aid in understanding the present invention, the discussion of which will follow in connection with FIGS. 1, 1A, 2 and 3, with a reversion to FIGS. 7 and 14.

## II. SCANNER MICROFICHE

Before continuing with a discussion of viewer-type microfiche, and because an operating program immediately follows the discussion of the viewer microfiche, attention is directed to FIGS. 4-7 which illustrate various techniques of manually-generated and COM-generated data, and techniques for ensuring alignment between the data to be retrieved and a sensor.

### A. Control Data and Output Data

Referring first to FIGS. 4 and 5, a microfiche card 50 is generally illustrated in FIG. 5 as comprising a body 52 composed of a plurality of information storage areas 54, and a header 56.

In the associated scanner apparatus, discussed in greater detail below, a linear photosensor is oriented transversely to the long dimension of the microfiche.

In apparatus which has been constructed, the sensor is placed in direct contact with the microfiche card. However, an optical system may be employed to project the microfiche images on a sensor. The use of an optical system is determined by the particular application.

The sensor may comprise a single continuous line of photocells fabricated as a single unit that spans the entire width dimension, 105mm for example, of the microfiche card, or the sensor can be constructed of any number of segments, each segment containing a number of photocells, with the segments fabricated as a single unit that spans the entire 105mm dimension of the microfiche card. The sensor can also be constructed of a single segment, or a number of segments, that span less than a full width of the microfiche card, or a matrix of cells which can sense a block of data, or a linear sensor in combination with a TV camera.

The light source that activates the sensor is located on the same side of a microcard as the sensor, whereas in microfiche applications the microfiche is located between the source and the sensor.

The entire sensor is moved left-to-right or right-to-left in the long direction of the microfiche. This is, of course, relative motion and in actual practice either the sensor or the card may be the moving element. As will be discussed below, logic circuits control the rate and mode of movement of the sensor.

As will be greatly appreciated by those skilled in the art, the sensor (or the transport) is mounted with a pivot, located at the upper end in the case of the sensor, and a device to move the bottom end of the sensor either left or right is provided to bring the sensor in complete alignment with a single vertical line of data that is to be read. The drives discussed herein with reference to block diagrams may advantageously with worm gear mechanisms and may utilize, for example, 2 DC servo-motor manufactured by Transcoil, Inc., Part Number K-21-5540-3-2-6-3.

Referring to FIG. 4, a schematic illustration of a storage area 54 illustrates manually-generated information. Inasmuch as this sample was manually generated, continuous bars have been employed in portions of the coding. The same microfiche card can be generated by COM techniques, in which case the bars would not necessarily be continuous.

The example of a scanner microfiche card illustrated in FIGS. 4 and 5 contains all digital data and is not typical in the sense that all frames are identical and widely spaced.

In a practical scanner microfiche card of this type, centering marks, incremental encoding and start of data codes would be placed only at the top row of frames, and the end of data and bottom sensor alignment codes would be placed only at the bottom row of frames, these codes being shown in FIG. 4 on both sides of the area 54 to aid in understanding the invention. In a microfiche card of this type, there would be very little unused space.

Referring to the storage area 54 illustrated in FIG. 4, the data which is to be retrieved from the microfiche card are provided as opaque-on-clear or clear-on-opaque marks, here opaque-on-clear marks, in the form of rows of data 58 which are aligned transversely of the microfiche card. Again, contrasting colors can be used.

The card bears a plurality of centering marks 60, each of which is aligned with a respective data row 58. The microfiche card also carries incremental and coding data 62, a start of data code 64, the data field 66, and end of data code 68 and bottom sensor alignment codes 70.

With the exception that the end of data code 68 and the bottom sensor alignment codes 70 are actually provided physically displaced on the codes 60, 62 and 64 on a card, the card is laid out in a plurality of elongate data rows 0--80. It is the incremental encoding 62, however, which identifies and forms the addresses of the data rows 58.

Referring to FIG. 5, a storage area 54' is illustrated. This storage area is quite similar to that of FIG. 4, with the exception that the data field, generally indicated at 78, is COM-generated data. This data may also be manually generated. In addition, with this type of microfiche card, although the same may be employed in the same manner as that of FIG. 4, may be employed as a programming tool in which the data 78 is to be fed step-by-step into another machine, such as a microprocessor, computer or the like. In this case, since it is not necessary to access a particular row, the encoding and alignment codes may be provided to ensure alignment at the first data row, such as indicated at 74 and at some other or periodic point or points, such as illustrated at 76. The use of the encoding and alignment marks will be best understood from the following detailed description of reading a scanner microfiche card.

B. Reading Scanner Microfiche

When certain information is selected for retrieval, the logic circuits of the scanner apparatus cause the sensor to move across the microfiche card toward the selected data and the logic circuit remember the position of the sensor at all times.

The sensor first moves to the transverse column of frames within which the selected line of data is to be found. After locating the proper column of frames, the sensor advances until it detects the incremental code within that frame defines the address of the selected data. The sensor then moves ahead until it detects the centering mark for that selected incremental code. The centering mark ensures that at least the top of the sensor will be in alignment with the codes at the selected address.

The logic circuits now compare bits 5--8 of the incremental code in the top longitudinal rows to bits 77-80 in the bottom longitudinal rows. If these bits do not correspond, bit-for-bit, the sensor is rotated in the proper direction, as determined by the logic circuits that compare the bits, to achieve alignment with the entire selected transverse data row 58.

When the bits 5--8 correspond, bit-for-bit, with the bits 77-80, the sensor has achieved alignment with the selected transverse data row. As previously mentioned, the sensor is pivotally mounted; however, in the alternative the transport may be pivotally mounted.

The sensor is now operated to scan the data transversely of the row aligned therewith and makes use of the information codes that are between the start of data code and the end of data code. Any portion of the data between the start of data code and the end of data code may be used, or ignored, as controlled by the logic circuits.

Referring now to FIG. 7, a more detailed discussion of access and alignment will be given for the scanner microfiche card. In FIG. 7 a keyboard 82 is provided forthe user to enter a desired address and an activating order. The keyboard may be a scanned type arrangement as is common in the art, or may be constructed using, for example, a MOSTEK MK 50311 N four function calculator circuit, the necessary additional

switches (PRICE, etc.) and a keyboard integrated circuit such as the S 9262 touch control interface manufactured by American Microsystems, Inc. The address is fed to and held in an entry register 84 and the activating order is fed to a lock 86 for sequence control. The clock 86 is also connected to other elements than illustrated in the drawing, which connections have been omitted for the purpose of clarity, the same being understood to those skilled in the art.

After an address has been entered and an activating order given, a column counter 104 and a comparator register 88 determine which direction to drive the sensor to the selected column.

After the sensor has found the selected column, the sensor steps ahead until the incremental code it reads compares bit-for-bit with the selected address, then the sensor is stepped ahead in smaller increments until the centering mark of the desired column is detected. The sensor then stops.

It should be noted that the sensor 98 may count any one of the bars, such as the bar 72 to determine the proper frame, and the remainder of the marks of the code, for example, the longitudinal bars in rows 1--8 may be counted to determine the proper transverse row 58.

The incremental code and the sensor alignment code, both being identical, are compared in the comparator register 88 and the sensor 98 is pivotally adjusted, as indicated at 100, so that the codes compare bit-for-bit.

The entire vertical line of data, that is a data row 58, is now scanned and abstracted or used by the data processing circuits 96 for output to circuits which are to utilize the digital information.

The column counter 104 keeps track of the column in which the sensor is positioned. The increment counter selects the address out of the scanned data, and the sensor alignment register selects sensor alignment codes from the scanned data to control positioning of the sensor. The sensor position drive and the sensor alignment drive area elements which are well known in the art.

The entire circuit outlined in the broken line may be configured from a microprocessor of the type Motorola MC 6800 P or the Intel 8080 series, while the sensor register 102 may be formed of any standard well known register and the sensor 98 may be constructed from a well known device, such as the Fairchild CCD 17280. As already mentioned, the keyboard 82 and the entry register 84 are also devices which are well known to those skilled in the art.

It should be noted that the comparator register includes a portion identified ROM or RAM, for a read only memory (ROM) or a random access memory (RAM). This is because the microprocessor may include a ROM in which the program is "wired" in. With the aforementioned Motorola device, however, we selected a RAM and it is necessary to feed in a program when the power to the unit is turned on. As will be evident from the discussion below with respect to the viewer microfiche and the program for reading the viewer microfiche, programming of a RAM in a microprocessor or a "wired-in" program for a ROM is well within the skill of those versed in this art.

III. VIEWER MICROFICHE CARD

The viewer microfiche card is generally illustrated at 110 in FIG. 8 as comprising a plurality of frames 112 formed in a matrix and having spaces between the frames which are scanned by a sensor 114 which is positioned, for example at 45° with respect to the directions of movement of the microfiche card. In the spaces between the frames 112 a plurality of tracking lines 116, 118, 120 are provided in the longitudinal direction of the card and a plurality of tracking lines 122, 124 and 126 are provided in the transverse direction of the microfiche card.

The tracking and code system described herein is one selected for certain of our test purposes, and represents only one of many configurations this scheme can take while still providing the necessary tracking and coding functions.

As illustrated in FIG. 8, the tracking lines 116--126 are not in the viewing areas and are placed on the microfiche card in precise positions relative to the graphic information within the viewing areas 112.

When this microfiche card 110 is employed in a viewer, the lines are projected on the sensor 114 out of the viewing area. The sensor 114 may be constructed of approximately <u>40</u> individual photocells and is used to detect the lines and other data. The sensor 114, as mentioned above, is positioned at 45° to the tracking lines to allow a single sensor to detect both vertical and horizontal tracking lines, although two sensors at right angles to the tracking lines could be utilized to perform as well.

The tracking lines may be either clear lines with a black background, or vice-versa. We have planned to use clear lines with a black background; however, the system will work either way.

A. Tracking

Referring to FIG. 9, when the sensor is positioned with respect to the tracking lines 116, 118, 120, as illustrated at 114, all three tracks are sensed, and the microfiche card is in the correct vertical "tracking" position for accessing or viewing. If the sensor is in the position illustrated at 114', however, the pattern of photocells sensing the tracks allows the logic circuits to determine the direction the microfiche must be moved to bring the sensor back to the relative position of that illustrated at 114. In the alternative, if the sensor is in the position illustrated at 114', the pattern of sensing photocells will allow the logic circuits to determine that the microfiche card must be moved vertically in a direction opposite to that to correct for the position 114'.

With the 45° orientation of the sensor 114, or two sensors oriented at 90°, the tracking scheme permits the vertical tracking lines 122, 124 and 126 to be followed in the same manner.

The tracking technique amounts to a dynamic, or feed-back, registration system.

The sensor 114 and tracking line position can also be used to provide proportional control. That is, any misalignment, greater than a single cell of the sensor, with respect to the tracking lines, will produce an error signal that can be used to correct the microfiche card position.

B. Stop at Frame Center

Referring to FIG. 10, the tracking lines described above allow for moving the microfiche card in a precise matrix or grid pattern in order to automatically access single or partial frames from a microfiche card.

In order to stop at the proper location to allow a frame to be viewed, a frame center code, for example the code marks 124, 126 and 128 is placed between two of the tracking lines, for example the tracking lines 118 and 120, while a frame center bar is placed between both the top and middle, and the middle and bottom tracking lines, that is between the tracking lines 116 and 118, and between the tracking lines 118 and 120, here illustrated in the form of two marks 130 and 132. In FIG. 10 the reference 114 diagrammatically illustrates the center line of the sensor, while the line 122 diagrammatically illustrates the center line of the frame. With this coding, there are two channels, Channel A and Channel B provided in which the frame center code is located in Channel B and the frame center bar is located in Channels A and B. The frame center code corresponds to the address of the frame in the horizontal direction.

The microfiche card is moved in a direction such that the relative motion of the sensor is left-to-right in FIG. 10. As the sensor 114 passes over the frame center code marks 124, 126, 128, the sensor detects the three bits of the frame center code, which the logic circuits interpret to mean that the microfiche is to stop when the sensor detects the bit between the upper tracking line 116 and the middle tracking 118, that is in Channel A and the bit between the middle tracking line 118 and the bottom tracking line 120, which is in Channel B.

C. Stop at Frame Corner

Referring to FIG. 11, a corner of a frame may be detected in a manner similar to that discussed above with respect to FIG. 9. The tracking lines 116, 118, 120 and the tracking lines 122, 124, 126 generally come together at the corner of each frame. Therefore, in the longitudinal direction there is still a Channel A and a Channel B, while in the transverse direction there is a Channel AV and a Channel BV. A plurality of frame corner code markings 136, 138 are provided in the Channel B and a plurality of frame corner code markings 140, 142 are provided in the Channel BV, while a frame corner bar is provided in Channel A and Channel B, as illustrated at 144, 146. In FIG. 11, the sensor, again symbolically illustrated at 114, detects the two frame corner codes 136, 138 as it passes thereover. The logic circuits then cause the transport to stop the motion when the frame corner bar 144, 146 is detected.

If downward vertical (transverse) motion is required after reaching a frame corner bar, the sensor 114 would be inhibited for a specific time and move downward. The time of inhibition is selected such that at the rate of motion utilized, the sensor would stand across all three vertical tracking lines before becoming active again. After becoming active, the sensor will "track" the vertical lines to its next point of action.

The logic program may ignore frame center codes and/or frame corner codes and/or any other codes that it may detect during travel along the tracking lines, until a selected point is reached. The distance between the points is measured, for example, by the rate of transport and by the time of transport.

D. Auxiliary Codes

Referring to FIG. 12, codes other than frame center codes, frame corner codes and frame corner and center bars may be placed within any of the tracking lines in Channel A and/or Channel B. For example, in FIG. 12, Channel A includes a code which is provided by the marks 148, 150, 152, 154 and 156, while in Channel B a code is provided with the marks 158, 160, 162, 164 and 166. These codes may be used for an infinite number of purposes, such as frame numbering, frame content designation, branch designation, sound track selection (when used with a complementary audio component), access address to a scanner, and so on. As illustrated in FIG. 12, the codes may be placed in either one or both of the channels.

For extreme reliability requirements, redundant codes may be utilized, as illustrated in FIG. 12. It will be noted that in Channel A there is a code provided by the markings 168', 170', 172' and 174' which is redundant with the code provided by the markings 168, 170, 172 and 174 in Channel B. For added reliability, a parity scheme will be used in addition to redundancy.

Although it has not been mentioned above, it should be readily apparent that all codes, including frame center codes and frame corner codes may take on an infinite variety of forms.

E. Reading Viewer Microfiche Card

Referring to FIG. 14, a system and a method for positioning a viewer microfiche card for reading is illustrated in which the apparatus comprises a keyboard 176 and an entry register 180 which are the same as similar elements illustrated in FIG. 7. The user keys in a desired address and an activation order, the address being deposited in the entry register 180 and the activation order being forwarded to the block 178 for sequence control. Again, the clock is illustrated as being connected only to certain components, while clock connections to other components have been omitted for purpose of simplicity.

After activating, the row register 194, via the comparator register 182, determines the vertical and horizontal direction in which the microfiche must be moved in order to bring the selected frame into the viewing position. The microfiche moves either vertically or horizontally, never diagonally in this system.

The tracking comparator 192 is fed by the sensor 188 by way of the sensor register 190 and compares the track position with a standard track position and controls the horizontal and vertical microfiche drives 186 and 184, respectively, to maintain tracking as discussed above so that the sensor extends over all three tracking lines in the particular direction which the microfiche is being driven.

The sensor register provides an output 198 as the data output, which output may have interposed therein an auxiliary code register 200 which reads the auxiliary codes, such as are illustrated in FIGS. 11 and/or 12.

The sensor 188 may be a 40 or 60 element sensor of the type discussed above. The vertical and horizontal drives 184 and 186, as well as the keyboard 176 and 180 are well known to those skilled in the art, while the elements bounded by the broken line may be a conventional microprocessor, such as the Intel 8080A or the Motorola MC6800P. As with the apparatus of FIG. 7, the comparator register 182 includes a ROM or a RAM section for storing the program. In a particular device constructed and utilized we have employed the Motorola MC6800P microprocessor with a RAM section so that it was necessary to feed in the program each time the system was energized.

F. Exemplary Program

The following is an exemplary program for accurately positioning a viewer microfiche, or more importantly a desired portion of a viewer microfiche, with respect to a viewer. It should be understood by those versed in this art that a similar program, although a simpler program, may be employed in connection with the apparatus of FIG. 7 for accurate alignment of a data row 58 (FIGS. 4-6) in that the scanner microfiche is generally only operated by movement of the sensor (or transport) in a single direction, in addition to correction of skew by the pivoting of the sensor or the transport, and in connection with the additional apparatus of FIG. 14 which relates to reading with the scanner.

SYSTEM MONITOR

| | | | |
|---|---|---|---|
| 21D BD | MONITR: | JSR | Set up peripherals for first |
| 00 | | | move |
| 00 | | | Move to upper left corner |
| 220 86 | HOME: | LDAA #$3C | Select vertimotor up (Horiz. |
| 3C | | | motor already selected left) |
| 222 B7 | | STAA PIACRB | |
| 80 | | | |
| 07 | | | |
| 225 86 | | LDAA #$FF | Both motors full speed ahead |
| FF | | | |
| 227 87 | | STAA PIAORB | |
| 80 | | | |
| 06 | | | |
| 22A 20 | GO: | BRA GO | Wait here while user resets |
| FE | | | and engages micro-switches |
| | | | at end of move |
| 22C BD | | JSR INIT | Reinitiate PIA's after manual |
| 00 | | | reset |
| 00 | | | |
| 22F 86 | STRIPSN: | LDAA #$04 | Routine to move to frame 01 |
| 02 | | | start position at left end of |
| | | | horizontal guidebar |

| | | | |
|---|---|---|---|
| 231 BD | | JSR BAKHOM | |
| 05 | | | |
| 234 20 | | BRA INITFRAME | Initiate frame pointer to 01 |
| 37 | | | |

ROUTINE TO SCAN DATA OF ARRAY FOR
POSITION AND SIZE OF ALL VALID FEATURES

| | | | |
|---|---|---|---|
| 246 BD | SCAN: | JSR SRCH | Get first feature |
| 00 | | | |
| 1E | | | |
| 249 CE | | LDX #$00 | Initialize feature array index |
| 00 | | | |
| 00 | | | |
| 24C DF | | STX CODEPTR | Save it |
| F3 | | | |
| 24E 96 | NEXFEAT: | LDAA LITCNT | Feature there? |
| F2 | | | |
| 250 2F | | BEQ END | No--end of scan |
| 17 | | | |
| 252 D6 | | LDAB CODEPTR+1 | Check for more than features, to protect program from being written over |
| F4 | | | |

```
254 C1      CMPB #$08
    08

256 2E      BGT END              If more than five, out of
    11                           focus--Go to re-read program
258 A7      STAA CODETABL+1,X    Yes--Store its size in array,
    F7                           then store its position

25A 96      LDAA FEATSTRT
    F1

25C A7      STAA CODETABL,X
    F6

25E 08      INX                  Update pointer for next feature

25F 08      INX

260 DF      STX CODEPTR          Save it again
    F3

262 BD      JSR XTRACT           Extract next feature
    01
    00

265 DE      LDX CODEPTR          Retrieve pointer
    F3

267 20      BRA NEXFEAT          --Go again
    E5
```

```
269 39     END:       RTS

26A 00

    00

    00

26D 86     INITFRAME: LDAA #$01

    01

26F 97                STAA PRESFRAME   Present frame=01

    E2
```

---

User sets breakpoint
to key in desired
next frame
↓

```
271 BD     ROUTE: JSR NINES            Routine to calc, route to next

    02                                 frame--first convert next

    C5                                 frame input to row and

                                       column format

274 96                LDAA NEXFRAME    To complete final hor, motion

    E1                                 use col. number of next frame

                                       (lower half-byte) to index a

                                       table indicating closest vert.

276 84                ANDA #$0F        bar to final row number

    0F

278 B7                STAA HERE

    02

    7F
```

| | | | |
|---|---|---|---|
| 27B CE | | LDX ROUTEABL | x contains base address |
| 02 | | | of table |
| BB | | | |
| 27E E6 | | LDAB O,X | Load address of vertical |
| OO | HERE: | | bar into ACCB |
| 280 D7 | | STAB HORZ | Final hor. motion completed |
| A9 | | | as (NEXFRAME - Vertical |
| | | | Hor ↑ ACCA    Bar Address ↑ ACCB |
| 282 90 | | SUBA HORZ | |
| A9 | | | |
| 284 97 | | STAA HORZ | Result is neg. for motion |
| A9 | | | to left, pos. for right |
| 286 96 | | LDAA PRESFRAME | Calc, first hor. motion |
| E2 | | | (present frame vert. bar) |
| 288 84 | | ANDA #$OF | |
| OF | | | |
| 28A 97 | | STAA HOR1 | As (Vert. bar PRESFRAME |
| A7 | | | address ACCB    hor. ACCA |
| 28C DO | | SUBB HOR1 | |
| A7 | | | |

| | | | |
|---|---|---|---|
| 290 | OO | | |
| | OO | | |
| | OO | | |
| | OO | | |
| 294 | 96 | LDAA PRESFRAME | Next, fetch row number of |
| | E2 | | present frame into lower |
| | | | half-byte of ACCA with zeros |
| | | | in upper half-byte |
| 296 | 48 | ASLA | |
| 297 | 48 | ROLA | |
| 298 | 49 | ROLA | |
| 299 | 49 | ROLA | |
| 29A | 49 | ROLA | |
| 29B | D6 | LDAB NEXFRAME | And same for row number |
| | El | | of next frame in ACCB |
| 29D | 58 | ASLB | |
| 29E | 59 | ROLB | |
| 29F | 59 | ROLB | |
| 2AO | 59 | ROLB | |
| 2Al | 59 | ROLB | |

| | | |
|---|---|---|
| 2A2 84<br>0F | ANDA #$0F | Mask out upper half-bytes |
| 2A4 C4<br>0F | ANDB #$0F | |
| 2A6 D7<br>A8 | STAB VERT | Vert. motion computed as<br>(PRESFRAME - NEXFRAME)<br>Vert. ← ACCA    Vert. ← ACCB |
| 2A8 90<br>A8 | SUBA VERT | |
| 2AA 97<br>A8 | STAA VERT | POS.=UP NEG.=DOWN |
| 2AC 26<br>09 | BNE DONE | Any vertical motion<br>required? |
| 2AE 96<br>A7 | NOVERT: LDAA HOR1 | No--Combine HOR1, HORZ<br>into single horizontal<br>motion and store in HOR1 |
| 2B0 9B<br>A9 | ADDA HORZ | |
| 2B2 97<br>A7 | STAA HOR1 | |

| | | |
|---|---|---|
| 2B4 7F | CLR HORZ | No need for HORZ |
| 00 | | |
| A9 | | |
| 2B7 7E | DONE: JMP NEXMOVE | ready to start move to next frame |
| 03 | | |
| 08 | | |
| 2BB —— | ROUTETABLES —— | Gives frame address of vertical route to be taken for destination frame whose column number is: ↓ |
| 2BC 01 | | 1 |
| 02 | | 2 |
| 03 | | 3 |
| 04 | | 4 |
| 05 | | 5 |
| 06 | | 6 |
| 07 | | 7 |
| 08 | | 8 |
| 2C4 09 | | 9 |
| | | Routine to convert between decimal and row-column format for frame numbers |
| 2C5 96 | NINES: LDAA NEXFRAME | ACCA gets converted |
| E1 | | |

```
2C7 81              CMPA #$19        Is ACCA in row 1 or row 2?
    19

2C9 2D              BLT 1 or 2       Yes--Branch around
    03

2CB 7E              JMP PATCH 6      No--Continue checking
    01
    E1

2CE 81    1 or 2:   CMPA #$10        No--is ACCA in row 1
    10

2D0 2C              BGE .+3          No--Branch around
    03

2D2 7E              JMP LAST         Yes --No conversion required
    05
    E7

2D5 C6    .+3:      LDAB #$01        ACCB=Conversion amount
    01                               =+1 for row 2

2D7 7D    DECIDE:   TST CONVRT       Which direction is
    00                               conversion desired?
    A5

2DA 7E              JMP PATCH 9      Go find out
    05
    D3
```

| | | | |
|---|---|---|---|
| 01E1 | 81<br>30 | PATCH 6: CMPA #$30 | Is ACCA in bottom row? |
| 1E3 | 2E<br>05 | BGT BOTTOM | Yes--Branch around |
| 1E5 | C6<br>02 | LDAB #$02 | Convert by adding + 2 for row 3 |
| 1E7 | 7E<br>02<br>D7 | JMP DECIDE | Go decide on conversion desired |
| 1EA | C6<br>D0 | BOTTOM: LDAB #$-30 | For bottom row, subtact ± 30 to convert |
| 1EC | 7E<br>02<br>D7 | JMP DECIDE | --Go do it |
| 5D3 | 27<br>06 | PATCH 9: CONVERT | If decimal to row/col. desired, do addition |
| 5D5 | 50 | NEGB | If row/col. dec. desired, do subtraction |
| 5D6 | 81<br>19 | CMPA #$19 | If, row 1, col. 9, then special case--only subtract 1 instead of 2 |

```
5D8  26            BNE CONVERT
     01

5DA  4C            INCA              Add 1 to compensate

5DB  1B   CONVERT: ABA               Preform conversion here
                                     (add ACCB to ACCA)

5DC  7E            JMP PATCH 10      Check for special decimal
     03                              conversions of 19→21 or 21→19

5DF  7D   STORE:   TST CONVERT       Should result be stored in
     00                              NEXFRAME? (convrt=0)
     A5

5E2  26            BNE LAST          No--Branch around
     03

5E4  97            STAA NEXFRAME     Yes--Store it
     E1

5E6  00

5E7  7F   LAST:    CLR CONVRT        --Auto clear flag (conversion
     00                              is decimal—→row/col. by
     A5                              default)

5EA  39            RTS               --All done
________________________________________________________________

3A0  C6   PATCH10: LDAB #$06         Load decimal adjust term
     06
```

| | | | | |
|---|---|---|---|---|
| 3A2 | 81 | | CMPA #$1B | Does conversion result equal |
| | 1B | | | 1B (19+2)? |
| 3A4 | 27 | | BEQ ADD | Yes--ADD decimal term, |
| | 05 | | | next |
| 3A6 | 50 | | NEGB | No--Negate decimal term for |
| | | | | next test |
| 3A7 | 81 | | CMPA #$1F | Does conversion result=1F |
| | 1F | | | (21-2)? |
| 3A9 | 26 | | BNE BACK | No--don't adjust |
| | 01 | | | |
| 3AB | 1B | ADD: | ABA | Yes--add decimal term |
| 3AC | 7E | BACK: | JMP STORE | Now go decide whether to |
| | 05 | | | store conversion result |
| | DF | | | |
| | | | | Subroutine to search and |
| | | | | lock onto a hor. guidebar |
| 2E0 | 96 | FINDBAR: | LDAA MINBAR | |
| | DB | | | |
| 2E2 | 97 | | STAA BARTIME | Load converter with min. |
| | B0 | | | time to establish a valid bar |

```
2E4  D6    REFIND: LDAB OUTVIEW     Which direction is search
     AC                             desired? (outview=0 for up,
                                    1 for down)

2E6  27            BEQ FARLEFT
     04

2E8  86            LDAA #$34        Down--Select vertical DIA
     34                             down

2EA  20            BRA .+2
     02

2EC  86            LDAA #$30        Select med. vertical
     3C                             search speed

2FO  B7            STA PIACRB
     80
     07

2F3  F7            STAB PIAORB      Start motor
     80
     06

2F6  80    LOOK:   JSR SRCH         Scan present input data
     00                             for guidebar
     1E

2F9  96            LDAA LITCNT      If found, LITCNT will
     F2                             be 0
```

| | | | |
|---|---|---|---|
| 2FB | 27 | BEQ FINDBAR | If not, reset bartime |
| | E3 | | and try again |
| 2FD | 7A | DEC BARTIME | When found, advance timer |
| 300 | 96 | LDAA BARTIME | Min. Time expired? |
| | BO | | |
| 302 | 26 | BNE LOOK | No--keep timing |
| | F2 | | |
| 304 | 7F | CLR PIAORB | Yes--bar found stop |
| | 80 | | motor |
| | 06 | | |
| 30F | 39 | RTS | Return to caller |
| | | | PERFORMS NEXT HOR. MOVE: |
| 320 | 96 | HORIZONTAL: LDAA HOR 1 | What kind of move is required? |
| | A7 | | |
| 322 | 27 | BEQ HALT | None--up date frame pointers |
| | 4B | | and to back for user input |
| 324 | 2B | BMI LEFTMOVE | Left--branch here |
| | 0A | | |
| 326 | 86 | LDAA #$3C | Right--Select direction |
| | 3C | | =right |

```
                                           DETERMINES NEXT MOVE
308 BD     NEXMOVE: JSR HORIZONTAL         Do first hor. move
    03
    20
30B 96              LDAA VERT              Any vert. motion required?
    A8
30D 27              BEQ DEST               No--at destination, update
    OA                                     frame pointer
3OF BD              JSR VERT               Yes--do vert. move
    03
    BO
312 96              LDAA HORZ              Prepare for further hor.
    A9                                     move if necessary
314 97              STAA HORl
    A7
316 BD              JSR HORIZONTAL         Then do it
    03
    20
319 96     DEST:    LDAA NEXFRAME
    El
31B 97              STAA PRESFRAME         New source in old destination
    E2
```

| | | |
|---|---|---|
| 31D 7E | JMP CODES | Go read codes at destination |
| 05 | | |
| 23 | | |
| 328 7C | INC HORI | Add in a dummy move so |
| 00 | | initially finding guidebar is |
| A7 | | not counted as a frame when |
| | | moving right. |
| 32B 97 | STAA HORDIR | Store direction data |
| DA | | |
| 32D 7E | JMP IGNR | Jump away from codes to |
| 01 | | find guidebar |
| BD | | |
| 330 86 | LEFTMOVE: LDAA #$34 | Store DIRECTION=LEFT |
| 34 | | (No dummy move required since |
| | | initially guidebar is advancing |
| | | to next frame when moving left |
| 332 97 | STAA HORDIR | Store direction |
| DA | | |
| 334 20 | BRA PREPULS | Determine whether long or |
| 20 | | short pulse is necessary, then |
| | | do it |
| 336 86 | IGNORE: LDAA #$FF | Routine to pulse through |
| FF | | intermediate codes: |

```
338 97              STAA PULSTIM       Use max. pulse width
    F5

33A 96              LDAA HORDIR        Select proper direction
    DA

33C C6              LDAB #$08          Select med. hor. speed
    08

33E BD              JSR PULSE          Do the pulse
    01
    FO

341 39              RTS                ;Back to caller
-------------------------------------------------------------------
0342 BD    REGET:  JSR REGISTER        ;Now refind guidebar for next
      03                               frame

344 70

347 96              LDAA HOR1          Update frame counter
    A7

349 2B              BMI INCR           In which direction?
    03

34B 4A     DECR:    DECA               --Down if positive

34C 20              BRA .+1
    01

34E 4C     INCR:    INCA               --Up if negative
```

| | | | |
|---|---|---|---|
| 34F 97 A7 | | STAA HORI | Store it |
| 351 27 15 | | BEQ STOP | All done if count is zero |
| 353 BD 00 53 | | JSR CENTER | Now guide along bar to move along next frame |
| 368 86 34 | STOP: | LDAA #$34 | Select direction=left |
| 36A 97 DA | | STAA HORDIR | |
| 36C BD 00 53 | | JSR CENTER | Guide left along bar to have position at left edge |
| 36F 39 | HALT: | RTS | Return to monitor for next move |
| 356 96 E1 | PREPULS: | LDAA NEXFRAME | ;Start calc. trigger ;Frame for long code ignore pulse |
| 358 D6 DA | | LDAB HORDIR | ;Which direction are we going? |

```
35A C1          CMPB #$34       ;If left, HORDIR=34
    34

35C 27          BEQ .+1         ;If left, trigger frame =
    01                          present frame (Do not
                                increment to next frame)

35E 4C          INCA            ;If right, trigger frame =
                                next frame

35F 90    .+1:  SUBA HOR1       ;Calc. present horizontal
    A7                          ;position to check if at trigger
                                ;frame (=NEXFRAME - HOR1)

361 7E          JMP PATCH 3     ;Now finish calc. check
    01                          ;for doing the long pulse, and
    C0                          ;pulse around the codes
```

THIS PATCH DETERMINES WHETHER FICHE IS GOING TO JUMP OVER TO RIGHTMOST COLUMN (COL. 9) AND IF NOT GOES AHEAD AND DOES A LONG PULSE TO GET OVER CODES (IF COL. 9, LONG PULSE WOULD RUN INTO MECHANICAL STOP

```
1C0 00    PATCH 3:              ;Frame number after this jump
    00                          ; is already in ACCA
    00
    00
    00

1C5 84          ANDA #$0F       ;Select column from
    0F                          ;frame number
```

```
1C7 81          CMPA #$09       ;Is it right most column?
    09

1C9 27          BEQ IGNR        ;If so, do a short jump
    10                          ;only

1CB 00
    00
    00
    00

1CF 86          LDAA #$01       ;Initialize a counter to
    01                          ;do 1 pulse

1D1 97
    D4          STAA PULSNMR

1D3 BD   MORE:  JSR IGNORE      ;Do the pulse
    03
    36

1D6 7A          DEC PULSNMR     ;Count it off
    00
    D4

1D9 26          BNE MORE        ;Not done--then pulse some more
    F8

1DB BD   IGNR:  JSR IGNORE      ;Get around remaining codes
    03
    36
```

```
1DE 7E          JMP REGET             ;Go find the
    03                                ;bar again
    42

                ROUTINE TO REGISTER CENTER BAR
                AT START OF NEXT FRAME

370 7F    REGISTER: CLR PULSTIM       Start with min. vert.
    00                                sweep from present
    F5                                position

373 96    SWEEP: LDAA PULSTIM         Initates a new sweep
    F5

375 8B          ADDA #$08             By incrementing the sweep
    F5                                timer

377 97          STAA PULSTIM
    F5

379 B6          LDAA PIACRB
    80
    07

37C 81          CMPA #$34
    34

37E 27          BEQ .+4
    04                                Switch vertical directions
```

```
380 86          LDAA #$34
    34

382 20          BRA .+2
    02

384 86   .+4:   LDAA #$3C

    3C

386 97   .+2:   STAA SAVZ       Save direction for additional
    EB                          pulse when bar found

388 C6          LDAB #$30       Select med. slow motor speed
    30                          for narrow sweep range

38A 7C          INC SRCHFLAG    Flag to search for data
    00                          during pulse
    AG

38D BD          JSR PULSE       Go do it
    01
    FO

390 96          LDAA LITCNT     Result of pulse?
    FZ

392 27          BEQ SWEEP       No data yet--Go again
    DF                          ;Additional pulse after
                                registering bar, to make sure
                                bar is in view and prevent
```

```
                                        misleading end of condition
                                        by center

394 86            LDAA #$01
    01

396 97            STAA PULSTIM          ;Small size pulse
    F5

398 96            LDAA SAVZ             ;Load same motor direction
    FB                                  as before

39A C6            LDAB #$20             ;Slow motor speed
    20

39C BD            JSR PULSE             ;Do the pulse
    01
    FO

39F 39            RTS                   ;End of register routine
                                        Performs next vert. move

3BO 96  VERTICAL: LDAA VERT             What direction required?
    AB

3B2 2B            BMI DOWNMOVE          Choose proper vert. direction
    03                                  for FINDBAR ROUTINE

3B4 4F            CLRA

3B5 20            BRA STORE
    02
```

```
3B7 86      DOWNMOVE: LDAA #$01
    01

3B9 20      STORE: BRA PATCH 9       Go store it
    1D

3BB BD      FIND:   JSR FINDBAR      Go across frame vert. to
    02                               next guidebar
    E0

3BE 86              LDAA #$34        Now guide along bar left
    34                               to home position

300 97              STAA HORDIR
    DA

3C2 BD              JSR CENTER
    00
    53
------------------------------------------------------------
3C5 96              LDAA VERT        Update frame counter
    A8

3C7 2B              BMI INCR         In which direction?
    03

3C9 4A      DECR:   DECA             --Down if positive

3CA 20              BRA .+1
    01
```

```
3CC 4C     INCR:    INCA               --Up if negative

3CD97               STAA VERT          Store it
     A8

3CF 26              BNE VERT           Done? If not, do another frame
     DF

3D1 39              RTS                Otherwise back to monitor
                                       for next

3D8 97     PATCH9: STAA OUTVIEW        Store vert, direction flag
     AC                                for findbar

3DA 86              LDAA #$FF          Now large hor. and vert. pulses
     FF                                to get away from present
                                       guidebar and angle bars

3DC 97              STAA PULSTIM       Max. pulse width
     F5

3DE 86              LDAA #$3C          HORDIR=right
     3C

3EOC6               LDAB #$07          HOR. SPEED=medium
     07

3E2 BD              JSR PULSE          Do horizontal pulse
     01
     FO
```

```
3E5 96          LDAA OUTVIEW     Which direction for large
    AC                           vertical pulse?

3E7 27          BEQ UP
    04

3E9 86  DOWN:   LDAA #$34        DOWN if outview=1
    34

3EB 20          BRA .+2
    02

3ED 86  UP:     LDAA #$3C        Up if outview=1
    3C

3EF C6  .+2:    LDAB #$70        Select med. vert. speed
    70

3F1 BD          JSR PULSE        Do the vertical pulse
    01
    F0

3F4 20          BRA FIND         Ready to find next guidebar
    C5

                                 Routine to bring 2 codes
                                 into view, read them and
                                 output to "RESULT"

47C 97  READZ:  STAA LOWLIM
```

```
       A2                                 Store limit from patch 7 for
                                          verifying codes

47E D7          STAB UPLIM
    A3

480 7F     READ2+4: CLR RESULT
    00                                    Clear previously read codes
    D9

483 7F          CLR CODECNT               Clear count for number of
    00                                    codes to read
    DF

486 86     NEXT: LDAA #$FF                Prepare to use pulse routine
    FF                                    with search for light feature

488 97          STAA PULSTIM              Make search for time big
    F5

48A 86          LDAA #$34                 Select direction=left
    34

48C C6          LDAB #$02                 Select slow hor. speed
    02

48E 7C          INC SRCHFLG               Enable data search
    00
    AG
```

```
491 7E          JMP PATCH12      Search for next code
    02
    36

494 00                           When code is in view,
    00                           position and read it,
                                 Back code into "RESULT"

496 96  BACK4:  LDAA CODECNT
    DF

498 4C

499 97          STAA CODECNT
    DF

49B 81          CMPA #$02        All codes read?
    02

49C 26          BNE NEXT         No--Get and re-read answer
    E8

49E 39          RTS              Yes--Back to monitor
----------------------------------------------------------
49F C6  SWAP:   LDAB #$04        Routine called by decode to
    04                           swap digits of result, since
                                 last digit was read first-
                                 need to rotate 4 bits

4A1 96  LOOP:   LDAA RESULT
    D9
```

| | | | |
|---|---|---|---|
| 4A3 2B | | BME .+3 | |
| 03 | | | |
| 4A5 06 | | CLC | Determine carry for next rotate |
| 4A6 20 | | BRA .+1 | |
| 01 | | | Swap by rotating 4 bits |
| 4A8 OD | .+3: | SEC | |
| 4A9 79 | .+1: | ROL RESULT | |
| 00 | | | |
| D9 | | | |
| 4AC 5A | | DEC B | All done? |
| 4AD 26 | | BNE LOOP | No--rotate again |
| F2 | | | |
| 4AF 00 | | | Yes--Back to PATCH 4 to verify 2nd code |
| 4BO BD | PATCH4: | JSR VERIFY | Verify code just read, output is re-read = 1 for good read, Ø for bad |
| 05 | | | |
| 4B3 D6 | | LDAB REREAD | Good read? |
| A1 | | | |

```
4B5 27              BEQ GOOD          Yes--Return from decode
    03                                routine

4B7 00                                No--Go ahead anyway--
    00                                Do not re-read code
    00                                manually or automatically

4BA 39      GOOD:   RTS               Return to READ 2
```

```
4BB BD      PATCH4B: JSR DECODE       ;When code is in view, position
    03                                ;and read it, pack code
    FC                                ;into result

4BE 86              LDAA #$FF         ;Set up another
    FF                                ;long pulse enable, to get off
                                      code

4C0 97              STAA PULSTIM      ;put the pulse
    FS                                ;length away

4C2 86              LDAA #$34         ;We still want
    34                                ;it to go left

4C4 C6              LDAB #$02         ;And, we want it
    02                                ;to go slow

4C6 7A              DEC SRCHFLG       ;Pulse until we get off code
    00                                ;(Pulse until dark)
    A6
```

```
4C9 BD            JSR PULSE        ;This is what actually
    01                             ;Makes it go
    FO

4CC 7E            JMP BACK4        ;Go back to what was before
    04                             ;it was not
    95

236 BD   PATCH12: JSR PULSE        Search for code
    01
    FO

239 BD            JSR SRCH         At end of search, has
    00                             code been found?
    1E

23C 96            LDAA LITCNT      If so, data is non-zero
    12

23E 26            BME FOUND        Yes--Go on
    03

240 7E            JMP NEXT         No--Do another search
    04                             pulse
    86

243 7E   FOUND:                    Go to decode here
    04
    BB
```

Routine executed upon reaching home
on destination frame. Reads all codes
at destination, chooses next frame address
from array based on user key input.
Finally, return to home position on the
frame and proceeds to user next frame
for movement based on key input on 64 or 65.

```
523 96    CODES: LDAA PRESFRAME   Where are we now?
    E2

525 81           CMPA #$34        If frame 64 or 65 (row 3,
    34                            4 or 5), must now read
                                  string of codes to be
                                  accessed by user keys.

527 27           BEQ BLTCODES
    3A

                                  If normal frame, must only
                                  read single code pair to
529 81           CMPA #$35        verify location at proper
    35                            destination

52B 27           BEQ KEYCODES
    36

52D 86    NORMAL: LDAA #$3F       First store software interrupt
    3F                            code to enable breakpoint
                                  for next input automatically

52F B7           STAA ROUTE
    02
    71
```

```
532 86          LDAA #$01       Flag for PATCH 7 that
    01                          frame is not 64 or 65

534 97          STAA NORM
    A4

536 BD          JSR PATCH 7     Do conversion and put
    05                          result in limits to verify
    10                          codes read.

539 BD          JSR READZ       Now read and verify
    04
    7C

53C B6   SAME:  LDAA #$01       Initialize number of code
    01                          pairs read to 1 for getting
                                back home

53E 97          STAA NUMBER
    DC

540 BD          JSR BAKHOM      Get back to home position
    05                          on frame
    46

543 7E          JMP ROUTE       Ready to go with user
    02                          input
    71
----------------------------------------------------------
546 97   BAKHOM: STAA PULSNMR
    D4
```

```
548 86      LDAA #$80       Use med. pulse width
    80

54A 97      STAA PULSTIM
    F5

54C 86      LDAA #$3C       Pulse direction=right
    3C

54E C6      LDAB #$08       Pulse speed fast
    08

550 BD      JSR PULSE       Pulse over the codes
    01
    FO

553 7A      DEC PULSNMR
    00
    D4

556 26      BNE BAKHOM
    FO

558 BD      JSR REGISTER    Done jumping over codes,
    03                      then find the guidebar
    70

55B BD      JSR CENTER      Back to left of bar for
    00                      home position
    53
```

| | | |
|---|---|---|
| 55E 39 | RTS | Ready to go on with user input, or automatic route to frame commanded by user key |
| 55F 00 | | |
| 00 | | |
| 00 | | |
| 562 00 | | |
| 563 86 | KEYCODES: LDAA #$BD | Store original instruction into first instruction of next cycle, to enable automatic routine to frame selected with user key |
| BD | | |
| 565 B7 | STAA ROUTE | |
| 02 | | |
| 71 | | |
| 568 86 | LDAA #$07 | Number of code pairs to be |
| 07 | | read=7 |
| 56A 47 | STAA NUMBER | |
| DC | | |
| 56C 97 | STAA NUMCNT+1 | Init. counter to keep track |
| DE | | of codes |
| 56E 7F | CLR NORM | Indicate special frame 64 or |
| 00 | | 65 for PATCH 7 |
| A4 | | |

| | | | | |
|---|---|---|---|---|
| 571 | 8D | PAIR: | BSR PATCH 7 | Calc. limits for valid code |
| | 9D | | | read |
| 573 | BD | | JSR READZ | Read next pair of codes |
| | 04 | | | |
| | 7C | | | |
| 576 | DE | | LDX NUMCNT | Load pointer to array |
| | DD | | | for storing the result |
| 578 | 96 | | LDAA RESULT | Fetch result of code |
| | D9 | | | |
| 57A | A7 | | STAA KEYTABL-1,X | Now store in table for access |
| | E2 | | | by key input later |
| 57C | 7A | | DEC NUMCNT+1 | Count off the codes just read |
| | 00 | | | |
| | DE | | | |
| 57F | 26 | | BNE PAIR | Not done yet? Then read |
| | FO | | | another pair of codes |
| 581 | 86 | SELECT: | LDAA #$CO | Prepare to light up next |
| | CO | | | frame LED |
| 58B | 20 | | BRA READKY | Then go wait for user to select |
| | 1B | | | next frame with a key |

Routine to convert present frame number into decimal format for comparison with result of reading codes, and set upper and lower limits to verify code reading

| | | | |
|---|---|---|---|
| 510 | 7C | PATCH 7: INC CONVERT | Enable flag for conversion |
| | 00 | | in this direction |
| | A5 | | |
| 513 | BD | JSR NINES | Do conversion on |
| | 02 | | NEXFRAME (=PRESFRAME); |
| | C5 | | Result of conversion is in ACCA |
| 516 | D6 | LDAB NORM | Is frame normal (not 64 or 65)? |
| | A4 | | |
| 518 | 27 | BEQ SPECIAL | No--store special limits |
| | 03 | | for codes on frames 64, 65 |
| 51A | 16 | TAB | Yes--Both limits are=PRESFRAME |
| 51B | 20 | BRA SETLIM | Limits are in ACCA, ACCB |
| | 04 | | |
| 51D | C6 | SPECIAL: LDAA #$79 | Upper limits for frames 64, 65 |
| | 79 | | is high digit=7, low digit=9 |
| 51F | 86 | LDAA #$60 | Lower limit is high digit |
| | 60 | | =6, low digit=0 |
| 521 | 39 | SETLIM: RTS | Return then read 2 intermediately |
| | | | stored ACCA and ACCB into limits |

SWITCH REG. READ PROGRAM--WAITS FOR SWITCH TO BE PRESSED, LEADS THE REGISTER, WAITS FOR SWITCH RELEASE AND SELECTS NEXT FRAME

```
585 87     SWITCH: STAA LEDREG     Light up appropriate LED's
    06
    00

588 B6     READ1:  LDAA SWREG      Read switch register
    07
    00

58B 81             CMPA #$80       Will have top bit set
    80

58D 27             BEQ READ1       Wait for switch to be pressed
    F9

58F 80             SUBA #$80       Erase top bit,
    80

591 97             STAA KEYREG     And save result
    D8

593 B6     READ2:  LDAA SWREG      Wait for switch release
    07
    00

596 81             CMPA #$80       Topbit will again be set
    80
```

| | | | |
|---|---|---|---|
| 598 | 26 | BNE READZ | All other bits should be reset |
| | F9 | | |
| 59A | 86 | LDAA #$40 | Now clear LED's |
| | 40 | | |
| 59C | 7E | JMP PATCH 11 | Go finish the routine |
| | 01 | | |
| | 7A | | |

---

| | | | |
|---|---|---|---|
| 17A | B7 | PATCH11:STAA LEDREG | Clear LED's |
| | 06 | | |
| | 00 | | |
| 17D | 96 | LDAA PREV | In case of previous bad read, recall previous result before re-reading (In case of next frame, this doesn't matter) |
| | AE | | |
| 17F | 97 | STAA RESULT | |
| | D9 | | |
| 181 | 39 | RTS | Back to caller |
| 5A0 | BD | READKY: JSR SWITCH | Read user selection key |
| | 05 | | |
| | 85 | | |
| 5A3 | CE | LDX #$0006 | Yes--prepare to access table based on switch read |
| | 00 | | |
| | 06 | | |

| | | | |
|---|---|---|---|
| 5A6 86 | | LDAA #$40 | Switch #6 is bit 6 set in |
| 40 | | | SWREG |
| 5A8 91 | BACK: | CMPA KEYREG | Was this switch pressed? |
| D8 | | | |
| 5AA 27 | | BEQ MATCH | Yes--Go access table |
| 07 | | | |
| 5AC 09 | | DEX | No--Advance table pointer |
| 5AD 44 | | LSRA | Advance to next down the line |
| SAE 26 | | BNE BACK | Last switch checked? No go |
| F8 | | | check another |
| 5BO 7E | ERRl: | JMP SELECT | Yes--switch data invalid; |
| 05 | | | interrupt for user to try again |
| 81 | | | |
| 5B3 A6 | MATCH: | LDAA KEYTABL,X | Fetch code data from table, |
| E3 | | | as selected by switch |
| 5B5 97 | | STAA NEXFRAME | Code data is next frame |
| El | | | address |
| 5B7 86 | | LDAA #$04 | Go back to home position before |
| 04 | | | moving to next frame |
| 5B9 BD | | JSR BAKHOM | |
| 05 | | | |
| 46 | | | |

| | | | |
|---|---|---|---|
| 5BC | 7E | JMP ROUTE | Ready to do it over again |
| | 02 | | |
| | 71 | | |

GENERAL PURPOSE
<u>PATTERN RECOGNITION SUBROUTINE</u>

Extracts Features According To The Following Definitions

—> Start of feature is two consecutive "light" half-bytes (INPTID=1)

—> INPTID=0--"DON'T CARE"--Counts as "light" inside feature, "dark" if outside

—> End of feature is last "light" half-byte preceeding first "dark" half-byte

Calls XAMIN to determine INPTID, scans to end of feature or end of array, whichever first output is feature (Start, Length) in half-bytes

If no feature is found, FEATSTRT=0

| | | | |
|---|---|---|---|
| 100 | 4F | XTRACT: CLRA | Clear outputs as signal in case no signal is found |
| 101 | 97 | STAA LITCNT | |
| | F2 | | |
| 103 | 97 | STAA FEATSTRT | |
| | F1 | | |
| 105 | 00 | | |
| | 00 | | |
| | 00 | | |
| | 00 | | |

```
109  BD   FSTIME: JSR XAMIN      Examine next half-byte
     01
     46

10C  86         LDAA #$1E        All data examined?
     1E

10E  91         CMPA BYTPTR+1
     D7

110  26         BNE CHKOUT       No--Go look for start of
     01                          feature

112  39         RTS              Yes--Go back to caller

113  96   CHKOUT: LDAA INPTID    What did last half-byte contain?
     AA

115  2E         BGT FIRST 1      ≥75% light--possible feature
     0B

117  7F         CLR LITCNT       < 75% light--cancel feature
     00
     F2

11A  20         BRA FSTIME       +keep looking
     ED

11C  00
     00
     00
```

```
     00
     00
     00

122  7C   FIRST1: INC LITCNT       First light data found--add to
     00                            length of feature
     F2

125  B6           LDAA #$02        Two consecutive light half-bytes
     02                            found yet?

127  91           CMPA LITCNT
     F2

129  26           BNE FSTIME       No--look for second
     DE

12B  96           LDAA BYTPTR+1    Yes--Calculate start of feature
     D7

12D  48           ASLA             By multiplying bytes

12F  9B           ADDA HLFPTR      Add half-byte count (0 or 1)
     AB

130  80           SUBA #$02        +Subtract two half-bytes, Byte
     02                            count always looks ahead one
                                   byte

132  97           STAA FEATSTRT    Store start of feature
     F1
```

| | | | |
|---|---|---|---|
| 134 | BD | 2NDTIME: JSR XAMIN | Look at next half-byte |
| | 01 | | |
| | 46 | | |
| 137 | 96 | LDAA INPTID | Result? |
| | AA | | |
| 139 | 2A | BPL SECND1 | ≥50% light (0 or 1) INPTID --add to feature |
| | 01 | | |
| 13B | 39 | RTS | < 50% light--end of feature |
| 13C | 7C | SECND1: INC LITCNT | Add to feature |
| | 00 | | |
| | F2 | | |
| 13F | 86 | CHECKIN: LDAA #$20 | End of data? |
| | 20 | | |
| 141 | 91 | CMPA BYTPTR+1 | |
| | D7 | | |
| 143 | 26 | BNE 2NDTIME | No--Look at next half-byte |
| | EF | | |
| 145 | 3A | RTS | Yes--end of feature |

EXAMINE SUBROUTINE

HLFTR=0 or 1 HALF-BYTE FROM BYTABL, OUTPUT IS (INPTID= 1 > 1/2 bits set, -1 for < 1/2 bits set, 0 for 1/2 bits set)

```
146 DE     XAMINE: LDX BYTPTR
    D6

148 A6             LDAA BYTABL+H,X   Fetch data pointed to by BYTPTR
    B2

14A D6             LDAB HLFPTR       Which half-byte is desired?
    AB

14C 26             BNE RHLF          If right (low order) ignore next
    09                               step

14E 7C             INC HLFPTR        If left (high order)point to right
    00                               for next time,
    AB

151 44             LSRA              Shift left data into right half-
                                     byte with zeros in left half-byte

152 44             LSRA

153 44             LSRA

154 44             LSRA

155 20             BRA IDENT         +Go on
    08

157 84     RHLF:   ANDA #$0F         Mask out left byte
    OF
```

| | | | | |
|---|---|---|---|---|
| 159 | 7A | | DEC HLFPTR | Point to left half-byte for next |
| | 00 | | | step |
| | AB | | | |
| 15C | 7C | | INC BYTPTR+1 | Point to next byte for next step |
| | 00 | | | |
| | D7 | | | |
| 15r | B7 | IDENT: | STAA HERE | Data is used as index for table |
| | 01 | | | |
| | 66 | | | |
| 162 | CE | | LDX #IDTABL | Xcontains table base address |
| | 01 | | | |
| | 6A | | | |
| 165 | E6 | | LDAB O,X | |
| | 00 | HERE: | | |
| 167 | D7 | | STAB INPTID | Store result of table look-up |
| | AA | | | |
| 169 | 39 | | RTS | All done |

| | | | | | | | | | |
|---|---|---|---|---|---|---|---|---|---|
| 01 | 16A | FF | IDENT: identifies input data as light (01), dark (FF) or either (00) | 0 | 01 | 172 | FF | 8 |
| 01 | | FF | | 1 | 00 | | 00 | 9 |
| 01 | 16C | FF | | 2 | 00 | 174 | 00 | A |
| 00 | | 00 | | 3 | FF | | 01 | B |

| | | | | | | | |
|---|---|---|---|---|---|---|---|
| 01 | 16E | FF | 4 | 00 | 176 | 00 | C |
| 00 | | 00 | 5 | FF | | 01 | D |
| 00 | 170 | 00 | 6 | FF | 178 | 01 | E |
| FF | | 01 | 7 | FF | | 01 | F |

## INTERFACE PROGRAM

INIT-SETS UP INPUT/OUTPUT PIA'S
SRCH-GENERAL PURPOSE SUBROUTINE TO
FIND FIRST FEATURE
STRINT-START INTERRUPT

```
00  OF    INIT:  SEI            Do not interrupt until this
                                routine is completed

01  86           LDA #$30       Select DDR for 8004
    30

03  B7           STA PIACRA
    80
    05

06  B7           STAA PIACRB   <--And 8006, with falling edge
    80                          sensor interrupt trig.
    07

09  7F           CLR PIACRA     Select all lines of 8004 as
    80                          inputs
    04

0C  86           LDAA #$FF
    FF
```

```
OE  B7          STAA PIAORB     Select all lines of 8006 as
    80                          outputs
    06

11  96          LDAA HORDIR     Select proper horizontal
    DA                          direction

13  87          TAA PIACRA      Store in 8005
    80
    05

16  86          LDAA #$40       Blank LED's
    40

18  B7          STAA LEDREG
    06
    00

1B  OE          CLI             Now ready for interrupts

1C  39          RTS             Back to monitor

1E  7C   SRCH:  INC PIACRB      Enable sensor interrupt
    80
    07

21  3E          WAI             Wait for new data

22  7F          CLR BYTPTR      Initialize pointers to left edge
    00                          of view
    D7
```

```
25  7F              CLR HLFPTR
    00
    AB

28  BD              JSR XTRACT       +Extract leftmost feature
    01
    00

2B  39              RTS              Back to caller

30  7A     INTRUP:  DEC  PIACRB      Disable further start interrupts
    80
    07

33  CE              LDX #$00         Reset input data counter
    00
    00

36  7C              INC PIACRA       Enable sensor data interrupt
    80
    05

39  86     WAT:     LDAA #$80        Mask out all but interrupt bit
    80

3B  B4              ANDA PIACRA
    80
    05

3E  27              BEQ WAIT         Wait for interrupt to occur
    F9
```

```
40  B6            LDAA PIAORA      Then fetch input data
    80
    04

43  A7            STAA BYTABL,X    +Store in proper byte of table
    B1

45  08            INX              Update data counter

46  8C            CPX #$20         All done?
    00
    20

49  26            BNE WAIT         No--back for next byte
    EE

4B  7A     DONE:  DEC PIACRA       Yes--disable sensor interrupt
    80                             until next interrupt routine
    05

4E  96            LDAA BYTABL      Shift leftmost data to right
    B1                             end since first data byte was
                                   missed

50  97            STAA BYTABL+21
    D1

52  3B            RTI              +Return
```

CENTER

```
53  BD   CENTER: JSR SRCH      Get start and length of
    00                         guidebar
    1E

56  D6          LDAB LITCNT    Length=0?
    F2

58  26          BNE GUIDE      No--Guidebar was found
    04

5A  7E          JMP PATCH 2    Yes--Check to make sure
    01                         blank data was really seen
    A0

5D  00

5E  7F   GUIDE: CLR BLANKCNT   Guidebar found--reset
    00                         blank data flag
    AD

61  96          LDAA FEATSTRT  Start of bar at left edge of view
    F1

63  27          BEQ LEFT       Yes--Go center the bar
    25

65  9B          ADDA LITCNT    No--End of bar at right edge
    F2                         of view?
```

```
67  81             CMPA #$40
    40

69  27             BEQ RIGHT        Yes--Go center the bar
    19

6B  C1             CMPB #$04        No--Does bar have minimum
    04                              valid width?

6D  2C             BGE SIDE 1       Yes--Go see if it needs center-
    2A                              ing

6F  86             LDAA #$3C        No--Enable PIA to stop motor
    3C

71  00

72  20             BRA HOR ONLY     --Go do it
    0C

74  D6    SIDE:    LDAB FEATSTRT    Check if guidebar needs
    F1                              centering

76  C1             CMPB #$08     <--Left edge extreme, bar
    [08]                            must start either left or
                                    allowed area

78  2D             BLT LEFT
    10

7A  C1             CMPB #$38     <--Right edge extreme
    [38]
```

| | | | |
|---|---|---|---|
| 7C | 2E 06 | BGT RIGHT | Or right of allowed area |
| 7E | 86 34 | LDAA #$34 | No centering required |
| 80 | C6 06 | HORONLY: LDAB #$06 | Load horizontal speed only |
| 82 | 20 0A | BRA STOMOTR | +Store in PIA |
| 84 | 86 34 | RIGHT: LDAA #$34 | If bar too far right (down) make vertical direction up; |
| 86 | C6 23 | LDAB #$23 | Store-vert. speed=2, Hor. speed=3 |
| 88 | 20 04 | BRA STOMOTR | +Store in PIA |
| 8A | 86 3C | LEFT: LDAA #$3C | If bar too far left (up) make vertical direction down |
| 8C | C6 23 | LDAB #$23 | Vert. speed=2, Hor. speed=3 |
| 8E | B7 80 07 | STOMOTR: STAA PIACRB | Store vertical direction |

```
92  F7             STAB PIAORB       +Both motor speeds
    80
    06

94  00
    00

96  7E             JMP CENTER        Back to start
    00
    53

99  96   SIDE1:    LDAA HORDIR       Makes sure proper horizontal
    DA                               direction is chosen for this
                                     cycle

9B  B7             STAA PIACRA
    80
    05

9E  20             BRA SIDE
    D4

AO  39   END:      RTS

1A0 86   PATCH2:   LDAA #$03         Valid blank at edge of guidebar
    03

1A2 B7             STAA PIAORB       Slow down motor in case
    80                               this is valid blank
    06
```

0007660



```
1A5 96          LDAA BLANKCNT   Register blank data
    AD
1A7 4C          INCA
1A8 81          CMPA #$04       Blank data seen min. number
    04                          times in a row?
1AA 27          BEQ .+5         Yes--Stop motor and exit
    05                          from center
1AC 97          STAA BLANKCNT   No--keep timing the blank
    AD
1AE 7E          JMP CENTER      Back another time
    00
    53
1B1 86    .+5:  LDAA #$34       Store vertical direction
    34
1B3 5F          CLRB            +Clear both motors
1B4 B7          STAB PIAORB
    80
    07
1BA 7F          CLR BLANKCNT    Reset flag automatically
    00
    AD
```

```
1BD 39              RTS             True end of guidebar here

                    PULSE

1FO C1   PULSE:  CMPB #$10          B contains motor speed, is
    10                              pulse vert.?--If so B ≥ 10

1F2 2D           BLT HORDIR         No--Store direction in hor. PIA
    05

1F4 B7           STAA PIACRB
    80

1F7 20           BRA .+8
    08

1F9 B7   HORDIR:STAA PIACRA
    80
    05

1FC 86           LDAA #$34          If horizontal; motor may not
    34                              yet be enabled for output, Go
                                    do it

1FE B7           STAA PIACRB
    80
    01

201 F7   +.8:    STAB PIAORB        Start upmotor
    80
    06
```

| | | | | |
|---|---|---|---|---|
| 204 | D6 | | LDAB PULSTIM | Fetch pulse width |
| | F5 | | | |
| 206 | 5A | MORE: | DECB | |
| 207 | 27 | | BEQ STOP | Pulse timed out? |
| | 0A | | | |
| 209 | 96 | | LDAA SRCHFLG | No--Data search desired during pulse? |
| | A6 | | | |
| 20B | 26 | | BNE JUMP | Yes--Go look |
| | 0D | | | |
| 20D | 4F | | CLRA | Execute inner wall |
| 20E | 4A | LOOP | DECA | Loop |
| 20F | 26 | | BNE LOOP | |
| | FD | | | |
| 211 | 20 | | BRA MORE | +Go test for end of pulse |
| | F3 | | | |
| 213 | 7F | STOP: | CLR PIAORB | Yes--Stop motor |
| | 80 | | | |
| | 06 | | | |
| 216 | 7F | | CLR SRCHFLG | Reset input enable Flag |
| | 00 | | | |
| | A6 | | | |

```
219  39            RTS                Back to caller

21A  7E    JUMP    JMP PATCH 1
     01
     83

183  D7    PATCH1:STAB SAV1           ;Save B to keep count
     D2                               pulse width

185  BD    AGAIN:  JSR SRCH           ;Go look
     00
     1E

188  F6            LDAB SAV1          ;Bring it back
     00
     D2

18B  96            LDAA LITCNT        ;Get the data
     F2
     26            BNE LIGHT          ;Go see what to do about it
     06

18F  96    DARK:   LDAA SRCHFLG       ;If no data, stop if < 0
     A6                               ;Keep going if > 0

191  2B            BMI STOP1          ;Here for stop
     06

193  20            BRA MORE1          ;Else Here for more pulse
     07
```

```
195 96     LIGHT:  LDAA SRCHFLG      ;If data there, stop if
    A6                               ;Search flag > 0, and keep
                                     going if SRCHFLAG < 0

197 2B             BMI MORE 1        ;Here for more pulse
    03

199 7E     STOP1:  JMP STOP          ;Here for stop
    02
    13

19C 7E     MORE1:  JMP MORE          ;Here for more pulse
    02
    06
```

<u>DECODE</u>

Positions, reads & packs a code when brought into view by monitor

```
3F7 86     DECODE-5: LDAA #$00       Turn on reread LED
    00

3F9 BD             JSR SWITCH        Only executed if code out of
    05                               focus--user presses red switch
    B5                               after focussing, then code re-
                                     read

3FC 86     DECODE: LDAA #$3C         Slow movement in up direction
    3C                               to position + read index bar
```

```
3FEC6          LDAB #$20          Select slow vert. speed
   20

400 B7         STAA PIACRB        Store direction
    80
    07

403 F7         STAB PIAORB        Store speed to start motor
    80
    06

406 BD  INDEX: JSR SRCH           Read leftmost feature
    00                            (Index BAR)
    1E

409 96         LDAA FEATSTRT      Look where it starts
    F1

40B 81         CMPA #$20          Far enough to right?
    20

40D 2D         BLT INDEX
    F7

40F 00
    00
    00
    00
413 86  ENOUGH: LDAA #$34         Now reverse direction to bring
    34                            all data into view
```

```
415 87          STAA PIACRB     (Index bar at far left) with
    80                          same slow speed
    07

418 BD   FIX:   JSR SRCH        Fixes index bar at top of view
    00
    1E

41B 96          LDAA FESTSTRT   Look where index bar starts
    F1

41D 81          CMPA #$10       Close enough to top
    10

41F 2E          BGT FIX         No--keep moving down
    F7

421 7E          JMP CALC        Yes--Stop motor & calculate
    04                          size of final positioning pulse
    FB

424 8B   FINAL: ADDA #$0A       Add in exp. deter. pulse width,
    0A                          set up to remove index bar and
                                erase all data in view

426 97          STAB PULSINT
    F5

428 86          LDAA #$34       Direction=down
    34
```

```
42A C6         LDAB #$30                  Speed=Slow vertical
    30

42C BD         JSR PULSE                  --Do it; then ready to
    01                                    stablize view for reading the
    FO                                    data bars

42F 86         LDAA #$FO
    FO                                    Long pulse width=delay time

431 97         STAA PULSTIM
    F5

433 86         LDAA #$34                  Do not change motor direction
    34

435 5F         CLRB                       No motion during delay

436 BD         JSR PULSE                  Perform the delay-then read
    01                                    to read data
    FO

439 96     INTERPRET: LDAA RESULT         ;Routine is to read properly
    D9                                    asitioned code by interrupting
                                          data found in the four
                                          quadrants of the view

43B 97         STAA PREV                  ;Save previous results in case
    AF                                    this read is bad
```

| | | |
|---|---|---|
| 43D BD | JSR SCAN | ;First get the data |
| 02 | | |
| 46 | | |
| 440 96 | LDAA CODEPTRM | Determine how many features |
| F4 | | were found, from size of array |
| 442 81 | CMPA #$06 | ;Less than three features |
| 06 | | (6 Bytes?) |
| 444 2D | BLT DECODE-5 | ;Yes--Wait for user switch |
| B3 | | as signal that focussing has |
| | | been adjusted, then re-read |
| | | code |
| 446 81 | CMPA #$0A | ; > 5 features (10 bytes)? |
| 0A | | |
| 448 2C | BGE DECODE-5 | ;Yes--Wait as above, then |
| A9 | | re-read code |
| 44A 96 | LDAA CODETABL | ;No--Where does first |
| F6 | | feature start? |
| 44C 97 | STAA QUAD | ;Initialize quad, marker to |
| EA | | start of first feature-- |
| 00 | | delimits quadrant in which |
| 00 | | first data bar is expected |

```
450 7F            CLR BARCNT         Points to data bar presently
    00                               being interpreted
    D3

45B CE            LDX #$0000
    00
    00

456 DF            STX TEMP+2         Points to feature presently
    EE                               under investigation

458 00                               ;Look for feature start
    00                               within specified tolerance
    00                               of quadrant marker

45B DE  NEXFEAT:  LDX TEMP+2         ;Fetch feature pointer
    EE

45D A6            LDAA CODETABL,X    ;Use it to fetch feature start
    F6

45F 90            SUBA QUAD          ;Find distance from
    EA                               feature to quad. marker=
                                     Abs. value of (FEATSTRT-
                                     QUAD)

461 ZA            BPL .+1
    01
```

```
463 40              NEGA               ;Change sign only if neg.

464 81     .+H:     CMPA #$06          ;Is feature in quadrant,
    06                                 within tolerance?

466 2F              BLE READ           ;Yes--Assign it to the data
    68                                 bar and read it

468 08              INX                ;No--Advance pointer to next
                                       feature

469 08              INX

46A DF              STX TEMP+2
    EE

46C 96              LDAA TEMP+3        ;Check for end of feature
    EF                                 array

46E 91              CMPA CODEPTR+H
    F4

470 2D              BNT NEXFEAT        ;Not at end of array, keep
    E9                                 looking

472 00                                 ;If pointing past end of array,
    00                                 no feature was found for the
    00                                 data bar--Assign thin feature
    00                                 (CODE=1) to the bar by setting
    00                                 carry bit
    00
```

```
478 OD            SEC

479 7E            JMP ASSIGN
    04
    DA
                                    ;Reads selected feature and
                                    assigns it to a data bar
                                    (0 or 1) then packs data bar
                                    into result and sets up for
                                    next data bar, if any.

4DO 86    READ:   LDAA #$05         ;Fetch min. size for "FAT"
    05                              (0) (BAR)

4D2 A1            CMPA CODETABL+1,X ;Compare with feature
    F7                               size

4D4 2F            BLE ZERO          ;Data bar larger, must be 0
    03

4D6 OD            SEC               ;Data bar smaller, must be 1

4D7 ZO            BRA ASSIGN
    01

4D9 OC    ZERO:   CLC

4DA 79    ASSIGN: ROL RESULT        ;Carry contains data bar value--
    00                              Shift left into Z-digit result
    D9
```

```
4DD96            LDAA BARCNT     ;Check for last data bar
   D3
4DF 81           CMPA #$03
   03
4E1 26           BNE SETUP       ;Not yet--set up for next bar
   07
4E3 96           LDAA CODECNT    ;Last bar--is this first code?
   DF
4E5 27           BEQ PATCH 4     Yes--Verify the code
   C9
4E7 20           BRA SWAP        No--wait until digits are
   B6                            swapped to verify
   00
4EACE    SETUP:  LDX #$0000      ;Get feature pointer back to
   00                            start of array
   00
4EDDF            STX TEMP+2
   EE
4EF 7C           INC BARCNT      ;Advance bar count
   00
   D3
```

```
4F2 96          LDAA QUAD      ;Advance quad, marker
    EA

4F4 8B          ADDA #$OE
    OE

4F6 97          STAA QUAD      ;Store it
    EA

4F8 7E          JMP NEXFEAT    ;Start looking for new data bar
    04
    5B
----------------------------------------------------------------
                               ;Check to see if in
                               ;Position for final pulse
                               ;to remove index bar

4FB 81   CALC:  CMPA #$10      ;is index bar still to left
    10                         of 1/4 mark?

4FD 2F          BLE NOTRDY     ;Yes--not read for final
    06                         ;pulse--keep moving down

4FF 7F          CLR PIAORB     ;No--Stop motor
    80
    06

502 7E          JMP FINAL      ;Calculate size of final
    04                         ;pulse from index bar position
    24                         ;in ACCA
```

```
505 7E   NOTRDY: JUMP DECODE    ;If sent here go back
    03                          ; and start positioning
    FC                          ;over again

508 00
    00
    00
    00
    00
    00
    00

50F 00

                                Subroutine to verify code
                                just read Low lim., up lim.
                                give accepted range for
                                code verification.

5EB 96   VERIFY:LDAA  LOWLIM    Fetch limits--lower
    A2

5ED D6          LDAB UPLIM      --upper
    A3

5EF 7D          TST CODECNT     lst or 2nd code?
    00
    EF

5F2 26          BNE  NOMASK     If second (l code already
```

| | | | |
|---|---|---|---|
| CD | | | counted)compare code with full limits |
| 5F4 84 OF | | ANDA #$OF | If first (no codes counted) compare code read with lower digit of limits only |
| 5F6 C4 OF | | ANDB #$OF | |
| 5F8 20 C7 | | BRA NOMASK | Go compare |
| 5C1 91 D9 | NOMASK: | CMPA RESULT | Is code read result less than lower limit? |
| 5C3 2E 07 | | BGT SET | ;Yes--Set re-read flag |
| 5C5 D1 D9 | | CMPB RESULT | No--greater than upper limit? |
| 5C7 2D 03 | | BLT SET | Yes--set re-read flag |
| 5C9 4F | CLEAR: | CLRA | No--clear re-read flag |
| 5CA 20 02 | | BRA .+2 | Go do it |
| 5CC 86 01 | SET: | LDAA #$01 | Set re-read flag here |

| | | | |
|---|---|---|---|
| 5CE 97 A1 | .+2: | STAA READ | Go do it |
| 5D0 39 | | RTS | Return to caller |

## IV. COMBINED DIGITIZED AND VIEWER MICROFICHE INFORMATION RETRIEVAL

### A. Parts Management and Inventory Control Example

In the foregoing discussions, the system has been covered with respect to proper alignment of a microfiche, both with respect to the viewer and with respect to the scanner. A specific example will now be provided with respect to a combined system, suitable for PMIC applications, with reference to FIGS. 1, 1A, 2, 3 and 14.

In utilizing the apparatus of FIG. 14 in a PMIC application, a single microprocessor may be employed. In addition to the apparatus already discussed, peripheral apparatus is provided for the scanner, which apparatus comprises a scanner control 202 and the sensor apparatus disclosed in FIG. 7, namely the sensor position drive 90, the sensor alignment drive 92, the scanner sensor 98, and the sensor register 102, as well as the auxiliary apparatus used in displaying, recording and transmitting the output data. This latter apparatus comprises the LED display 22, the line printer 14, the digital tape recorder 15, and the MODEM unit 16.

Before turning to a specific example, as can be seen in FIG. 1, a dealership information terminal is generally illustrated at 10 as comprising a microfiche file 11 which includes master, parts and price microfiche, a viewer 12, a scanner 13, a printer 14, a tape recorder 15, a MODEM unit 16, and his local telephone instrument 17. The telephone instrument 17 may be used to connect the terminal by way of the telephone network 18 to a central computer 19 located in a plant which supplies parts to the dealership.

The printer may advantageously be a line printer, such as the 40 character line printer of Anadex model DP-1000. A suitable tape recorder is the digital recorder, known as the SC-1000 Dumb Recorder, manufactured by Seaton Corp. The MODEM unit may be a Data COM 302.

The viewer 12 is illustrated as comprising a viewing screen 20 which is positioned with respect to an optical system (not shown) which includes a microfiche transport which receives the viewer-type microfiche through a slot 21. A digital display 22, for example a LED display, is positioned immediately below the viewing screen 20.

The viewer 12 also comprises a keyboard which includes a four-function calculator unit 23 and a plurality of operational switches 24-33, the purpose of which will become evident from the description below.

FIG. 2 illustrates a portion of a frame 34 of a viewer microfiche, corresponding to a frame 112 of FIG. 8, which microfiche is a master microfiche, while FIG. 3 illustrates a frame 35, also corresponding to a frame 112 of FIG. 8, of a viewer microfiche which is constructed as a parts fiche. The frame 35 is illustrated as comprising one portion 36 which bears graphic information, here in the form of an exploded view of a pump, and another portion 37 which bears alphanumeric information concerning the parts illustrated in the frame portion 36.

Assuming now that a customer goes to the parts department of a dealership, for example a farm equipment dealership, needing a part for a tractor. The customer has the model number and can describe where the part is located on the tractor.

Armed with this information, the parts man matches the machine and model information provided by the customer to the machine and model information on the header of the parts microfiche in the microfiche file 11, extracts the corresponding microfiche from the microfiche file and reads from the header that the parts on this microfiche are also found on the price microfiche #1. He then extracts the corresponding price microfiche and inserts the parts microfiche in the slot 21 of the viewer and the price microfiche in the slot 13' of the scanner 13. The price microfiche, of course, takes the form discussed above with respect to FIGS. 4 and 5, and has a header which identifies the models served by that parts microfiche. There are, of course, fewer price microfiche than parts microfiche, since a single price microfiche carries prices for several models. The data itself is in the form of digitized codes readable to the scanner, rather than to the human eye.

The parts man then turns the viewer on with the ON-OFF switch 44 to energize all of the system hardware and the microfiche are automatically registered in place.

The parts man then presses the HOME button 33 which inputs an address for a home position into the entry register 180 (FIG. 14) to automatically index the microfiche to the first frame. The first frame is an index frame which bears alphanumeric information for the parts on that particular microfiche, such as "Dual Pump--Frame 12". The parts man then enters the 12 with the numerical keys 23 and presses the ADVANCE key 30. The 12 is the address and the key 30 provides the activation. The system operates for alignment as discussed above so that frame 12 becomes properly registered and the content thereof appears on the screen 20. In this example, this is the frame illustrated in FIG. 3. The parts man then checks the part and its location with the customer to determine if the proper part has, indeed, been selected. In this example, the part 11 indicated at 38 is the desired part and is described with the key number 11 at 39 in the portion 37 of the frame as being the manufacturer's part number W 11852, as seen at 40, and is described at 41 to be a SHAFT-drive (1). The correct part corresponds to the locator number "(1) 01-237". The portion (1) of the locator number indicated at 42 corresponds to the price microfiche. The locator number has a two-fold function. First of all, within the dealership the locator number can identify a physical location of the part, e.g., the corresponding part bin. Secondly, the locator number portion 43 is the address for the price microfiche.

The parts man then enters the locator number portion 43 with the keyboard keys 23 and presses the PRICE key 31. In response to these actions, the scanner transport moves to the addressed column and reads that portion of the column called for by the address. As an example, and referring to FIG. 14, the entry from the address register 180 into the comparator register 182 may set up a basis of comparison which instructs the microprocessor and associated circuits to cause the scanner sensor to read only those bits occurring after the sensor scans a predetermined number of bits. The scanner control 202 feeds the scanned information into the comparator register 182 via the auxiliary code register 200. The comparator register 182, over a similar path back to the scanner control 202, which comprises logic circuits, monitors the data being presented from the scanner sensor 98 to the sensor register 102 so that the information finally lodged in the auxiliary code register is that portion of the scanned line defined by the address of the locator number. Actuation of this process by depression of the key 31 causes the desired information to be output to the display unit 22. As can be seen in FIG. 1A, the manufacturer's part number W 11852 is displayed as a check, as is the price fiche locator number (1) 01-237. In addition, the asterisk appearing on the display tells the parts man that the dealer has that part in stock. The information to the far right-hand side indicates that the desired part has a price of $7.25. Again, the locator number in the central portion of the display informs the parts man of the physical location of the part.

The desired part is retrieved and the parts man copies the information from the display line onto the customer's sales invoice.

Then, for the dealership records, the parts man presses the SALE key 24, and possibly also the ORDER key 26 before depressing the PRINT key 29. The key 29 activates the line printer 14 which immediately copies the part information, error-free, from the entire display line onto a printer tape. The entry is thereby logged as a part of the day's transactions.

In cases where the part is common to several subassemblies, a # appears as a part of the display to indicate that the locator number is a composite number. Inasmuch as the information on that part would appear on many parts microfiche and have numerous locator numbers, a single number is selected as the locator and appears on the master microfiche, the price microfiche and on the stop bins.

In situations where a telephone inquiry is made and the customer can provide the manufacturer's part number directly, the parts man can immediately access the correct master microfiche of the few necessary master microfiche which carry all of the manufacturer's parts in alphanumeric order.

Upon selecting the correct master microfiche, he places the same in the viewer slot 21 and presses the HOME key 33. As with the parts microfiche, the master microfiche is addressed and moved to the home frame, generally the first frame.

The home frame comprises an index or the first page of an index which states that the part numbers in the area under investigation are located at frame 47. He then enters 47 with the keys 23 and presses the ADVANCE key which, as before, causes the desired frame to appear on the viewer screen 20. He there finds the manufacturer's part number provided by the customer, which, in this example, again is part W 11852, as seen in FIG. 2. As also illustrated in FIG. 2, this part number corresponds to the locator number (1) 01-237. The parts man can now select the price microfiche (1) and proceed as in the foregoing example.

Cancellations are also readily handled with this PMIC system. If a customer calls later to cancel an order, the parts man can simply bring up the same display on the LED unit 22, depress the CANCEL key 27 and then depress the PRINT key 29. The cancellation activates both the printer 14 and the magnetic tape recorder 15.

A number of conveniences for the parts man have been built into the system. The memory key MM can be used to enter all part locator numbers calling for the same price microfiche and recalled by pressing the MR key and then the PRICE key to display the line of information. The clear entry CE key permits the parts man to recover from a faulty entry, as is common practice with calculator devices, and the RETRACE key 32 permits the parts man to retrace frames step-by-step previously called for up to, for example, 32 frames in that the internal built-in memory is a last in-first out (LIFO) memory.

The parts man will find the printed tape an essential part of his operation in that it carries all transactions identified by the symbols SALE, CHARGE, ORDER, CANCELLATION that was a SALE or a CHARGE or an ORDER or a CANCELLATION. The printed tape also carries information entered directly from the keyboard, for example the printing of the customer's invoice number with each transaction.

The system also allows the parts man to order a particular quantity by calling up the price line, by keying in the desired quantity, depressing the Q key 28, depressing the ORDER key 26 and then the key 29.

Should the dealer desire to have a listing of all the transactions of the day arranged by type, all transactions can be placed on the magnetic tape during the day and then, at the end of the day, extracted type-by-type onto the print tape, by use of optional additional controls associated with the magnetic recorder.

The printed tape is a permanent record of the day's activity in the parts department, as well as a record of the day's orders contained on the magnetic tape. At the end of the day, when the parts man is ready to submit orders to the computer 19 at the factory, he places a telephone call with the conventional telephone instrument 17 and dials in his assigned identification code. He is then interfaced with the computer 19 which will accept the data from the magnetic tape unit 15. He then places the telephone hand set on the MODEM unit 16 and activates playing of the magnetic tape through the MODEM unit 16, the telephone 17 and the telephone network 18 to the computer 19.

Such daily, or even weekly communication, though it requires typically only a few minutes of telephone time, provides for frequent order fulfillment from the manufacturer's warehouse. Frequent order and fulfillment capability provides accuracy in "real" inventory maintenance.

In an ON-line real-time situation, speedy and frequent delivery must be made in order to justify the high costs involved. Although the instant PMIC system is based on fast and frequent delivery, it can, through the nature of its low cost, maintain a high degree of efficiency while permitting a more modest delivery system in terms of turn-around time.

To this point, the PMIC system described has serviced six of the seven critical areas previously stressed including quick access to parts identification and price, fast retrieval from storage bins, complete records, daily ordering and frequent fulfillment.

As to up-dating and maintaining a smoothly functioning system, the key is the microfiche as a data base, which is distributed at the remote locations, on safe, read-only microfiche media.

A PMIC system requires information that is both accurate and current--current enough for the application, yet costing no more than absolutely necessary. The price microfiche plays a particularly special communications role in providing this information up-date feature, both accurately and economically. Heretofore, a troublesome particularly disadvantageous drawback to the use of microfilm verses paper was the inability to correct errors regarding price or part information. When a parts man became aware of an error he could not make a note of it on microfilm as he could on paper. Now, however; with the advent of the scanner the cooperable COM-generated digital microfiche having high-density digitized information, errors are quickly and economically rectified.

The price microfiche are replaced at responsible intervals and each may contain a special section which holds inventory up-date information. When the parts man receives a new price microfiche he may place the same in the scanner and press a predetermined address, for example, 30-300 on the keyboard and then the PRICE key. In response to this action, the title line of a list of special messages appears on the display. He may, at this point, elect to read these messages one-by-one by pressing the PRICE key each time. Or, he may elect to use the PRINT key and obtain a print out of all the messages.

The price microfiche also supplies the corrective information required for a part: substitutions, parts that have become obsolete, new interchangeable parts, replacements, and errors.

When the locator number for such a part is used, the display line appears, but special information on the digitized price microfiche energizes, in an automatically flashing manner, a lamp below the PRICE key. This signals that there is corrective information on this part. By pressing the PRICE key, the correct information will appear on the line; in this case, a substituted part number.

All of the critical areas noted above have now been served: part identification, price, retrieval from storage, records, ordering, order fulfillment, and up-dating of inventory information and corrections.

From the foregoing, it is readily apparent that the PMIC system disclosed herein is a totally integrated communications system which is readily expandable in function to economically meet the data base and random access requirements of business, industry, education,military and government.

## V. SINGLE MICROFICHE CONTROL SYSTEMS

### A. Banking and Credit Check Examples

As mentioned above, bank account signature cards may be placed on viewer-type microfiche with the account number serving as an address of the frame on which that signature will appear. Inasmuch as a great number of signatures can be placed on a frame, account numbers would be grouped and a decoder included to define a common address for a plurality of signatures. Keying in of the account number would then cause the viewer to function as before so that the desired signature, along with signatures of the same frame, will be brought into view for checking the same against the signature on a check, withdrawal slip or the like.

Privacy in checking account status and other information may be obtained by utilizing, in a separate system, the scanner 13, the LED display unit 22 and a keyboard, all located in the same housing. Referring to FIG. 1B and FIG. 7, the system would operate as described above such that the account number, properly keyed in, will cause the scanner to find the proper account and provide the account information on the display. FIG. 1B illustrates the scanner 13 connected to the keyboard 82 of FIG. 7 and receiving a digitized microfiche 50 of the type illustrated in FIG. 5, for feeding information to a display unit 22.

### B. TV Applications

Referring to FIG. 7, the circuit is shown adapted for display of the digitized information carried by the scanner-type microfiche on a TV set 101, the information being fed from the data processing circuits 96 to the TV set 101 by way of a video display generator 103. The video display generator may be constituted by, for example, the video display generator S68047 manufactured by American Microsystems, Inc.

C. Computer Programming

Referring to FIGS. 1C and 7, a computer, such as a home computer is generally illustrated as comprising a program section including a RAM 105 which is fed by a scanner 13 which receives the program on a digital microfiche 54' of the type illustrated in FIG. 6. In this embodiment, there is no addressing of the scanner and the keyboard and entry register would include a permanent sequential address for sequentially stepping the scanner to output the program to the RAM 105. A more simple control circuit may be included in the scanner in place of the microprocessor to merely step the scanner through its sequence of operations. The embodiment of FIG. 5 may also be used as a RAM and accessed by addressing of the scanner by the computer.

Although we have described our invention by reference to particular illustrative embodiments thereof, many changes and modifications of the invention may become apparent to those skilled in the art without departing from the spirit and scope of the invention. We therefore intend to include within the patent warranted hereon all such changes and modifications as may reasonably and properly be included within the scope of our contribution to the art.

CLAIMS:

1. A combination for ensuring registration of data on a microfiche card with an optical path the combination comprising a microfiche card including a portion bearing data aligned in respect of a first predetermined line, a microfiche card carrier predeterminately located in respect of the optical path, and registration means on said carrier for engaging said card at at least two points on a second predetermined line parallel to said first predetermined line.

2. The combination of claim 1, wherein said microfiche card includes a pair of spaced apertures centered on said second predetermined line, and said registration means on said carrier includes a pair of pins spaced equal to the spacing of said apertures.

3. The combination of claim 1, wherein said microfiche card includes an edge extending along said first predetermined line, and said alignment means on said carrier includes at least one upstanding member along said second predetermined line for engaging said edge.

4. The combination of claim 3, wherein said microfiche card comprises another edge extending perpendicular to the first-mentioned edge, and said carrier includes another upstanding member located on a line perpendicular to the first-mentioned upstanding member for engaging said other edge of said microfiche card.

5. A digital microfiche for use with an optical scanner, comprising a first storage area bearing optically retrievable first information arranged in a plurality of parallel rows, a second storage area bearing identification codes for at least one of said rows and first alignment codes for said one row, and a third storage area bearing second alignment codes for said one row identical to said first alignment codes, and a centering mark, said centering mark located on the centerline of said one row.

6. The digital microfiche of claim 5, comprising a centering mark, a first alignment code and a second alignment code for each of said rows.

7. The digital microfiche of claim 5, comprising a centering mark, a first alignment code and a second alignment code for at least two spaced apart rows.

8. A digital microfiche for use with an optical scanner, which is movable relative thereto, comprising a microfiche card including a header and a body, at least one information bearing frame on said body including a plurality of parallel rows of digital information extending generally perpendicular to said header, at least one centering mark located adjacent said header and on the centerline of a respective row, a first alignment code on said body at one end of and extending tranversely of the respective row, and a second alignment code located at the end of the respective row opposite said first alignment code, said first and second alignment codes defining any skew of the row with respect to the scanner when the scanner is reading said centering mark.

9. The digital microfiche of claim 8, comprising a separate centering mark for each of said rows, and wherein said first and second alignment codes extend transversely across all of said rows.

10. The digital microfiche of claim 8, comprising a second centering mark spaced from said one centering mark on the centerline of a corresponding row, and other first and second alignment codes at opposite ends of said corresponding row to recheck alignment at said corresponding row as the relative movement of the scanner and card positions the scanner at said corresponding row.

11. A digital microfiche for use with an optical scanner which extends in a first direction and is movable relative the microfiche in a second direction, comprising a microfiche member including a body storing digital information arranged in parallel rows which extend in the first direction, a plurality of centering marks, each of said centering marks located on the centerline of a respective row, a first band of code marks including a plurality of first code marks which constitute the addresses of each of said rows, said first code marks including first alignment marks, and a second band of code marks including second alignment marks, indicate any skew from the first direction between the scanner and a row when the scanner is located to read the respective centering mark.

12. The digital microfiche of claim 11, comprising a start-of-data mark and an end-of-data mark located immediately adjacent and at respective ends of said rows of digital data.

13. The digital microfiche of claim 11, wherein said first and second alignment marks are identical.

14. The digital microfiche of claim 11, comprising information frames which include said rows of digital information, and wherein said first band of code marks includes frame identification marks.

15. In a microfiche of the type which has information bearing frames spaced apart in rows which extend in at least a first direction, which frames are to be permeated by a light beam, the microfiche to be carried by a transport which is movable in at least the first direction, the improvement comprising a plurality of tracking lines on said microfiche extending in said first direction in the spaces between and adjacent each of said rows of frames to be sensed by a light sensor, a plurality of row identification codes between said tracking lines associated with and defining a frame address along the first direction to be read by the light sensor, and frame stop codes in the spaces between said tracking lines and at predetermined locations with respect to said frames, to be read by the light sensor.

16. The microfiche of claim 15, wherein said frame stop codes are spaced a predetermined distance from the centers of said frames.

17. The microfiche of claim 15, wherein said frame stop codes are spaced a predetermined distance from certain corners of said frames.

18. The microfiche of claim 15, wherein the frames are arranged spaced apart in an array so as to extend in the first and a second direction, and said tracking lines are first tracking lines and said row identification codes are first row identification codes, and said frame stop codes are first frame stop codes, and comprising a plurality of second tracking lines between said frames and extending in the second direction to be sensed by the light sensor, and a plurality of second row identification codes between said second tracking lines and defining a frame address along the second direction to be read by the light sensor, and a plurality of second frame stop codes in the spaces between said second tracking lines and at predetermined locations with respect to said frames, to be read by the light sensor.

19. The microfiche of claim 15, comprising auxiliary data codes between said tracking lines.

20. The microfiche of claim 19, wherein said auxiliary codes are between first and second, and second and third, tracking lines and are redundant.

21. A microfiche reading system for a microfiche which has rows of digital information extending in a first direction, a centering mark on the centerline of at least one of said rows, a first alignment code at one end of the one row, and a second alignment code at the opposite end of the one row, comprising a scanner including an optical sensor which extends in the first direction and which is mounted for movement, relative the microfiche, in the first direction and which is pivotally mounted for arcuate movement, relative the microfiche, a sensor position drive and a sensor alignment drive, first means connected to said sensor position drive and operable to cause positioning of said sensor adjacent the one row of digital information in response to detection of the first alignment code, and operable to energize said sensor position drive until said sensor senses the centering mark, second means operable to compare the first and second alignment codes sensed by said sensor and provide a skew error, in response to misalignment of said sensor and the one row, to cause said sensor alignment drive to pivot said sensor to correct for the skew.

22. The microfiche reading system of claim 1, wherein each row has a centering mark, a first alignment code and a second alignment code and wherein said first means comprises a row address input means, a sensor register connected to said sensor for storing information read by said sensor, a counter connected to said sensor register for counting rows, and an increment register connected to said sensor register to cause said position drive to incrementally position said sensor until a centering mark is detected.

23. The microfiche reading system of claim 22, wherein said second means comprises a sensor alignment register connected to said sensor register for storing sensed first and second alignment codes, said first and second means including a programmed comparator register having inputs connected to said input means, said counter, said increment register and said alignment register, and outputs connected to said position and alignment drives, for causing positioning and alignment of said sensor in response to the data received at its inputs.

24. A microfiche reading system for positioning, in a viewing position, a selected frame of a microfiche which has a plurality of spaced-apart frames arranged in rows which are aligned in at least one direction and which frames have respective address codes stored on the microfiche, comprising a microfiche transport and an optical scanner, a selected one of said transport and optical scanner being movable to provide relative movement therebetween along the one direction, said transport supporting the microfiche adjacent said optical scanner, said scanner operable to read said stored addresses and provide corresponding first address signals corresponding to the frame address being scanned, register means connected to said scanner for storing said first address signals, drive means including positioning means connected to the movable one of said microfiche transport and optical scanner and operable to move the same along the one direction, address input means for generating second address signals representing a selected frame to be positioned at the viewing position, and control means connected to said drive means and to said address input means and said register means for comparing said first and second address signals and causing operation of said drive means in response to differences therebetween.

25. The system of claim 24, wherein the microfiche includes a plurality of parallel tracking lines extending along the rows of frames, and wherein said scanner includes track scanning means for detecting the tracking lines and providing tracking signals, said drive means includes error means for causing movement in a second direction perpendicular to the one direction, and said system comprises a tracking comparator connected to said track scanning means for comparing said tracking signals to reference tracking signals and providing tracking error signals to said error means to cause compensating movement to correct tracking.

26. A microfiche reading system for positioning, in a viewing position, a selected frame of a microfiche which has a plurality of frames arranged spaced-apart in an array of columns and rows and frame column and row addresses codes stored on the microfiche in the spaces between the columns and the rows, respectively, comprising address input means operable to generate selected column and row address signals corresponding to a desired frame to be viewed, a microfiche transport for supporting the microfiche and including first positioning means operable in response to first positioning signals to move the microfiche along the column direction and second position means operable in response to second positioning signals to move the microfiche along the row direction, optical scanning means adjacent said microfiche transport for reading said column and row address codes and producing corresponding column and row address signals, control means connected to said scanning means and said address input means and to said transport for comparing said selected and corresponding address signals and generating the first and second positioning signals in response to differences between the selected and read addresses.

27. A data record to be read with an optical scanner which extends in a first direction, comprising a microfiche card, said microfiche card including at least one first information storage area storing output data in rows which extend in the first direction, at least one second information storage area storing row center data aligned with and indicating the centers of the rows of output data, third and fourth, spaced apart, information storage areas, said third information storage area storing row identification data for each row of output data, and each of said third and fourth information storage areas storing, for each row of output data, skew data oriented with respect to the first direction such that the scanner must read different skew data when there is skew of the scanner with respect to a row of output data.

28. The data record of claim 27, wherein said third and fourth information storage areas lie on opposite sides of said first information storage area.

29. The data record of claim 27, wherein said second information storage area comprises a plurality of center marks extending in a row in a second direction.

30. The data record of claim 29, wherein said third and fourth information storage areas lie on opposite sides of said first information storage area.

31. The data record of claim 30, wherein said third information area lies between said first and second information areas.

32. The data record of claim 27, wherein said output data is in digital form.

33. The data record of claim 32, wherein said output data comprises COM generated data.

34. The data record of claim 27, wherein said row identification is in digital form.

35. The data record of claim 27, wherein said skew data is in digital form.

36. The data record of claim 35, wherein said skew data comprises a pair of identical digital codes located in said third and fourth information storage areas, respectively.

37. The data record of claim 27, wherein said information storage areas are carried across said microfiche card in the order of second, third, first and fourth information storage areas.

38. A data record to be read by an optical scanner which extends in a first direction, comprising a microfiche data carrier, a plurality of parallel rows of output data borne by said data carrier, a plurality of first marks borne by said data carrier extending in a row in a second direction, each mark aligned centered of a respective row of output data, a plurality of second marks adjacent and identifying respective rows of output data, a plurality of third marks forming a first digital skew code at and on each side of a centerline through each first mark and its respective row of output data, a plurality of fourth marks forming a second digital skew code identical to the first digital skew code at and on each side of each of the centerlines, said skew codes defining skew upon misalignment of the scanner and a centerline.

39. A data record to be scanned in a first direction by an optical scanner, comprising a microfiche card including a plurality of rows of digital output information, each of said rows extending parallel to each other of said rows and perpendicular to the direction of scanning.

40. The data record of claim 39, comprising a pair of skew codes, each skew code located spaced from the other skew code at and on each side of the centerline of the first row to define skew misalignment between the scanner and the centerline, at the beginning of a scan.

41. A method of aligning an optical sensor with a row of digital information carried by a microfiche, comprising the steps of applying an address code for the row on the microfiche to identify the row, including first alignment data at one end of the row, applying a center mark on the centerline of the row, applying second alignment data on the microfiche at the opposite end of the row, scanning across the microfiche until the address code is sensed, continuing scanning until the center mark is sensed, reading and comparing the first and second alignment codes to determine any skew between the centerline of the sensor and the centerline of the row.

42. The method of claim 41, comprising the further steps of correcting skew between the sensor and the row.

43. The method of claim 42, comprising the further step of scanning the digital information of the row and generating corresponding output signals.

44. A method of positioning a frame of a microfiche at a viewing position, comprising the steps of applying digital address codes along a row of frames, applying a frame stop code for each frame on the microfiche, scanning across the row of frames with an optical sensor until a desired address code is sensed, and continuing scanning until a frame stop code is sensed.

45. The method of claim 44, further comprising the steps of applying a plurality of parallel tracking lines on the microfiche parallel to the row of frames, sensing the tracking lines while scanning for the desired address code, and correcting the relative positions of the sensor and microfiche to maintain all tracking lines within the sensing range of the sensor.

46. In a microfiche of the type which has information bearing frames spaced apart in rows which extend in at least a first direction, which frames are to be permeated by a light beam, the microfiche to be carried by a transport which is movable in at least the first direction, the improvement comprising at least one tracking line on said microfiche extending in said first direction parallel to said rows of frames to be sensed by a light sensor, a plurality of row identification codes associated with and defining frame addresses on said microfiche along the first direction to be read by the light sensor, and frame stop codes at predetermined locations with respect to said frames, to be read by the light sensor.

47. Apparatus for reading a microfiche which bears rows of digital information and addresses for the rows of digital information, comprising microfiche support means for receiving a digitized microfiche thereon, an optical sensor for reading the digital information on the microfiche, transport means mounting one of said support means and sensor for movement one relative to the other, input means for selectively inputting the row addresses, control means connected between said input means and said transport means and responsive to an address to cause said transport means to position the addressed row of the microfiche in alignment with said sensor, and output means connected to said sensor, including display means for displaying the addressed information.

48. Apparatus for reading a microfiche which bears areas of digital information, comprising scanning means for optically scanning the areas of digital information in a predetermined sequence to generate digital signals corresponding to the stored information, and means connected to said scanning means for receiving and storing the digital signals.

49. A method of reading a microfiche which bears areas of information thereon, comprising the steps of optically scanning and generating electrical signals representing the information, and storing information representing the electrical signals.

50. Apparatus for reading a microfiche which carries digital information, comprising scanning means for optically scanning the microfiche and producing digital signals, converter means connected to said scanning means for converting the digital signals into other signals representing graphic information, and display means connected to said converter means and responsive to said other signals to display the graphic information.

51. The apparatus of claim 50, wherein said converter means comprises a video generator, and said display means is a television receiver.

52. The apparatus of claim 50, wherein said converter comprises a decoder, and said display means comprises an alphanumeric display unit.

53. A method of reading a microfiche which carries information, comprising the steps of optically scanning and generating first electrical signals representing the information, converting the first electrical signals into second electrical signals, and applying the second electrical signals to a display unit to display images corresponding to the scanned information.

54. The method of claim 53, wherein the step of converting is further defined as converting the first electrical signals into video signals.

55. The method of claim 53, wherein the step of generating is further defined as generating digital first electrical signals and the step of converting is further defined as decoding the digital first signals into digital second signals representing alphanumeric characters.

56. A parts management and inventory control system comprising a plurality of first microfiche, each of said first microfiche including a first header and a first body, said first body including addressed first areas of optically viewable parts information and an index area bearing parts descriptions and corresponding first addresses, and said header bearing indicia designating the parts contained on that microfiche, a plurality of second microfiche, each of said second microfiche including a second header and a second body, said second header bearing indicia identifying the respective second microfiche, and said body including addressed second areas of digital information each including manufacturer's part number and price, said viewable parts information on said first body including for each respective part a locator number which includes a first portion which is the identifying indicia of the corresponding second microfiche and a second portion which constitutes the address of the respective part information on that second microfiche, a viewer including a microfiche viewer transport means for receiving a first microfiche and an optical system having a viewing screen, said viewer also including homing means operable to position said viewer transport means such that said index area is projected on said viewing screen, and first key-in addressing means operable in response to keying-in a first address to position said transport means such that a desired addressed first area is projected on said viewing screen, a scanner including an optical scanning sensor means for receiving a second microfiche, and second key-in addressing means operable in response to keying-in a second portion of a locator number to cause said sensor means to scan the digital information identified by the keyed-in second portion of the locator number, an alphanumeric display connected to said scanner, and display activation means connected to said scanner for converting and applying the digital information to said display means.

57. The apparatus of claim 56, wherein each of said first microfiche comprises, in each of said first area, pictorial views of the parts and alphanumeric descriptions of the parts.

58. The apparatus of claim 56, wherein each of said second microfiche comprises, in each of said second areas, digital information stating whether the respective part is carried in stock.

59. A parts management and inventory control system comprising a plurality of first microfiche, each of said first microfiche including a first header and a first body, said first body including addressed first areas of optically viewable parts information and an index area bearing parts descriptions and corresponding first addresses, and said header bearing indicia designating the parts contained on that microfiche, a plurality of second microfiche, each of said second microfiche including a second header and a second body, said second header bearing indicia identifying the respective second microfiche, and said body including addressed second areas of digital information each including manufacturer's part number and price, said viewable parts information on said first body including for each respective part a locator number which includes a first portion which is the identifying indicia of the corresponding second microfiche and a second portion which constitutes the address of the respective part information on that second microfiche, a viewer including an optical system, a viewing screen, transport means for receiving and positioning a first microfiche with respect to said optical system, a scanner including an opto-electric scanning sensor means for receiving and scanning a second microfiche, an alphanumeric display means, and control means connected to said viewer, said scanner and said alphanumeric display means, said control means including address input means including pre-programmed home address means and selectively operable addressing keys, a programmed control circuit connected to said viewer transport means, to said scanner and to said address input means, first activation means connected to said control circuit and operable to cause said control circuit to position said transport means so that said index area appears on said viewer screen to provide a parts address to be selectively keyed-in with said addressing keys, second activation means connected to said control circuit and operable to cause said control circuit to position said transport means so that the addressed first area appears on said viewer screen to provide the corresponding information including the desired locator number whose second portion is to be selectively keyed-in with said addressing keys to access a second microfiche identified by the first portion of said locator number, and third activation means connected to said control circuit and operable to cause said control circuit to operate said scanner to read the addressed second area and apply the read information to said alphanumeric display means.

60. The system of claim 59, and further comprising a printer connected to said control circuit, and fourth activation means connected to said control circuit and operable to cause control circuit to activate said printer to record the information appearing on said alphanumeric display means.

61. The system of claim 60, and further comprising magnetic recorder means connected to said control circuit, and fifth activation means operable to cause said control circuit to activate said recorder to record the content of the alphanumeric display means and specific order data.

62. The system of claim 61, wherein said fifth activation means includes selectively operable cancel and order keys which are operable to provide the respective order data.

63. The system of claim 62, and further comprising a remotely located parts order computer which is connectible to a telephone system, and a modulator demodulator unit which may be coupled to the telephone system and which is connected to said magnetic recorder means for transmitting the content of the recorder means to said computer.

64. The system of claim 59, and further comprising a parts facility housing said system, said parts facility including a plurality of parts locations, each of said parts locations bearing a respective one of said locator number.

65. The system of claim 59, wherein said viewable parts information includes drawings of the parts and a tabulation of alphanumeric information concerning the respective parts.

66. Apparatus for checking financial account information, comprising a display device, a microfiche bearing addressed areas each of which includes account information, a scanner operatively connected to said display device and including an optical sensor and a control circuit connected to operate said sensor in response to an input address, and key address input means connected to said control circuit and operable to input an account number as an address.

67. A bank signature card system comprising a microfiche bearing areas containing customer signatures and addresses corresponding to the customer account numbers and identifying the locations of the signatures, optical system including a microfiche transport and a viewing screen, a control circuit connected to drive said transport in response to input addresses, and an input keyboard connected to said control circuit and operable to key-in a customer account number to bring the respective signature on the viewing screen.

68. A financial management and control system comprising a plurality of first microfiche, each of said first microfiche including a first header and a first body, said first body including addressed first areas of optically viewable customer signatures and an index area bearing customer names and account numbers as first addresses, and said header bearing indicia designating the group of signatures contained on that microfiche, a plurality of second microfiche, each of said second microfiche including a second header and a second body, said second header bearing indicia identifying the respective second microfiche, and said body including addressed second areas of digital information each including customer account information, said viewable parts information on said first body including for each respective signature a locator number which includes a first portion which is the identifying indicia of the corresponding second microfiche and a second portion which constitutes the address of the respective customer account information on that second microfiche, a viewer including a microfiche viewer transport means for receiving a first microfiche and an optical system having a viewing screen, said viewer also including homing means operable to position said viewer transport means such that said index area is projected on said viewing screen to check customer names and account numbers, and first key-in addressing means operable in response to keying-in a first address to position said transport means such that a desired addressed first area and the desired signature is projected on said viewing screen, a scanner including an optical scanning sensor means for receiving a second microfiche, and second key-in addressing means operable in response to keying-in the second portion of a locator number to cause said sensor means to scan the digital information identified by the keyed-in second portion of the locator number, an alphanumeric display connected to said scanner, and display activation means connected to said scanner for converting and applying the digital information to said display means.

69. The system of claim 68, wherein said address portion of said locator number comprises the customer account number.

70. The system of claim 68, wherein said customer account information constituted by digital information on a second microfiche comprises the customer account number.

71. A financial management and control system comprising a plurality of first microfiche, each of said first microfiche including a first header and a first body, said first body including addressed first areas of optically viewable customer signatures and an index area bearing customer names and corresponding account numbers as first addresses, and said header bearing indicia designating the group of signatures contained on that microfiche, a plurality of second microfiche, each of said second microfiche including a second header and a second body, said second header bearing indicia identifying the respective second microfiche, and said body including addressed second areas of digital information each including customer account information, said viewable parts information on said first body including for each respective signature a locator number which includes a first portion which is the identifying indicia of the corresponding second microfiche and a second portion which constitutes the address of the respective customer account information on that second microfiche, a viewer including an optical system, a viewing screen, transport means for receiving and positioning a first microfiche with respect to said optical system, a scanner including an opto-electric scanning sensor means for receiving and scanning a second microfiche, an alphanumeric display means, and control means connected to said viewer, said scanner and said alphanumeric display means, said control means including address input means including pre-programmed home address means and selectively operable addressing keys, a programmed control circuit connected to said viewer transport means, to said scanner and to said address input means, first activation means connected to said control circuit and operable to cause said control circuit to position said transport means so that said index area appears on said viewer screen to provide a check of customer name against account number and obtain the address to be selectively keyed-in with said addressing keys, second activation means connected to said control circuit and operable to cause said control circuit to position said transport means so that the addressed first area appears on said viewer screen to provide the corresponding customer signature and the locator number whose second portion is to be selectively keyed-in with said addressing keys to access a second microfiche identified by the first portion of said locator number, and third activation means connected to said control circuit and operable to cause said control circuit to operate said scanner to read the addressed second area and apply the read account information to said alphanumeric display means.

72. The system of claim 71, wherein said address portion of said locator number comprises the customer account number.

73. The system of claim 71, wherein said customer account information constituted by digital information on a second microfiche comprises the customer account number.

74. An information record comprising a microfilm body including a peripheral edge extending about said body, a marginal first area adjacent said peripheral edge and a second area adjacent said first area, said second area bearing rows of digital information, and said first area bearing digital addresses, each address adjacent and identifying a respective row of digital information.

OCTROOIBUREAU
ARNOLD & SIEDSMA
DEN HAAG en MÜNCHEN

Octrooigemachtigden
ir R. Hoijtink, ir C.W. Bruin,
ir W.F. Cammel, drs W.R.E.G. Keppels,
ir L.M.C.J. Konings,
ir A.F. Arnold, ir P.N. Hoorweg
Merken, Modellen mr Olga Kuijpers
Sweelinckplein 1, Den Haag.
Tel. (070) 65 48 33, telecopier,
int. + 31 70 65 48 33. Telex 31086 ahsnl.

Octrooigemachtigde
ir A. Siedsma

0007660

Isartorplatz 5, 8000 München 2.
Tel. (089) 22 38 88, telecopier,
int. + 49 89 22 38 88.
Telex 528226 asgjmd.

The European Patent Office
Branch at The Hague

Onze ref.: D HO/Se/NewsLog1

Uw ref.: your letter of September 10,1979

Den Haag, October 23,1979

Postbus 18 558,
2502 EN Den Haag, Holland

re:European patent application 79200373.3
in the name of News Log International Inc.
term for reply: October 30,1979

---

At the point in question in the specification namely page 12, lines 14-20 vis-a-vis page 12, lines 13-19 of the original documents, the original documents referred to a copending application because of separate filings in the United States. That co-pending application is included in the present application. Therefore, it was necessary to modify the paragraph in question so as to not be misleading in that the application is included in the instant application. The changes made in the original paragraph are not changes of substance, but rather changes of necessity for the sake of continuity.

Please inform me (by telephone) whether this explanation is acceptable or not. If not we will submit you fresh page 12 corresponding to the originally filed one.

The Representative,

The correction is allowed
The Hague, 10.12.1979
Receiving Section,
L. Verscheuren

VESTIGINGEN: Breda, Willemstraat 13; Enschede, de Ruyterlaan 2A

Fig. 1

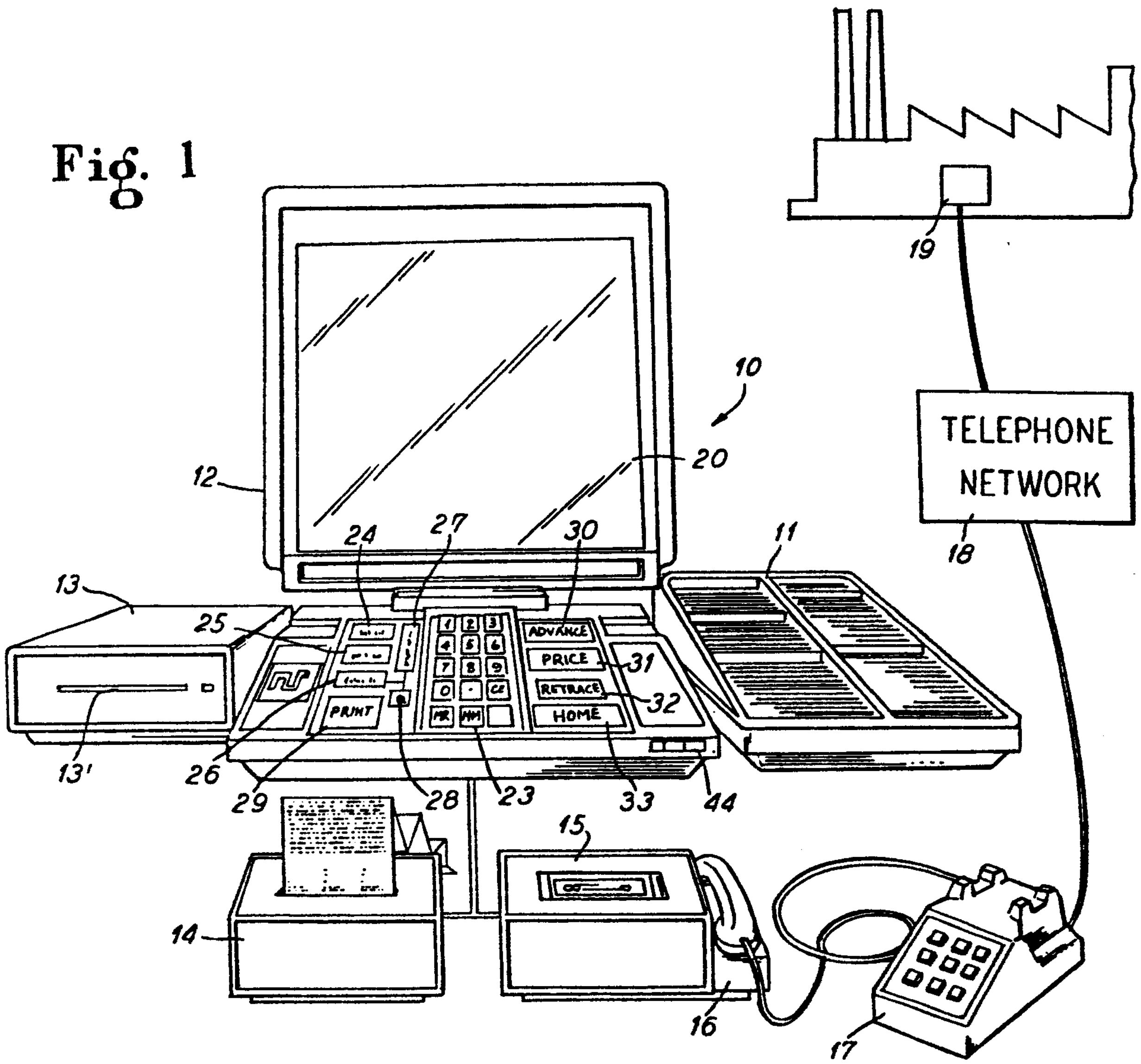
10
12
20
24
27
30
11
13
25
31
32
26
13'
29
28
23
33
44
19
TELEPHONE NETWORK
18
15
14
16
17
ADVANCE
PRICE
RETRACE
HOME
PRINT

Fig. 1A

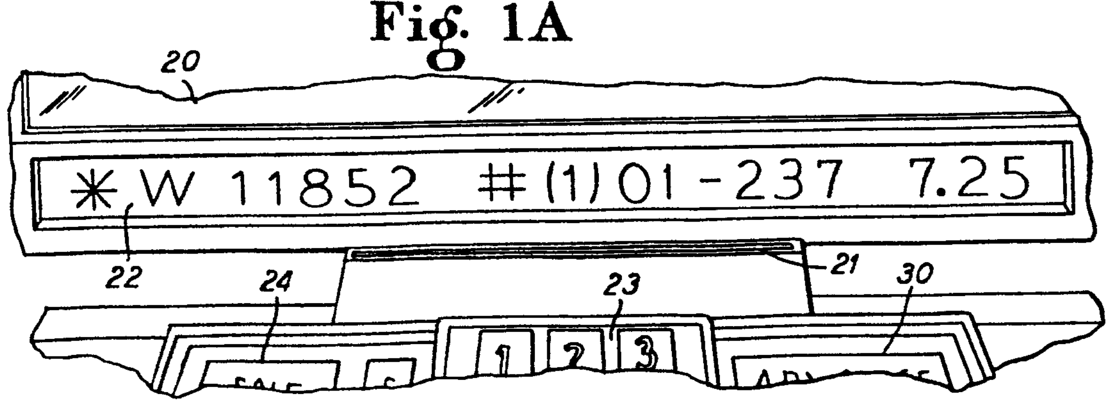
20
*W 11852 #(1)01-237 7.25
22
21
24
23
30

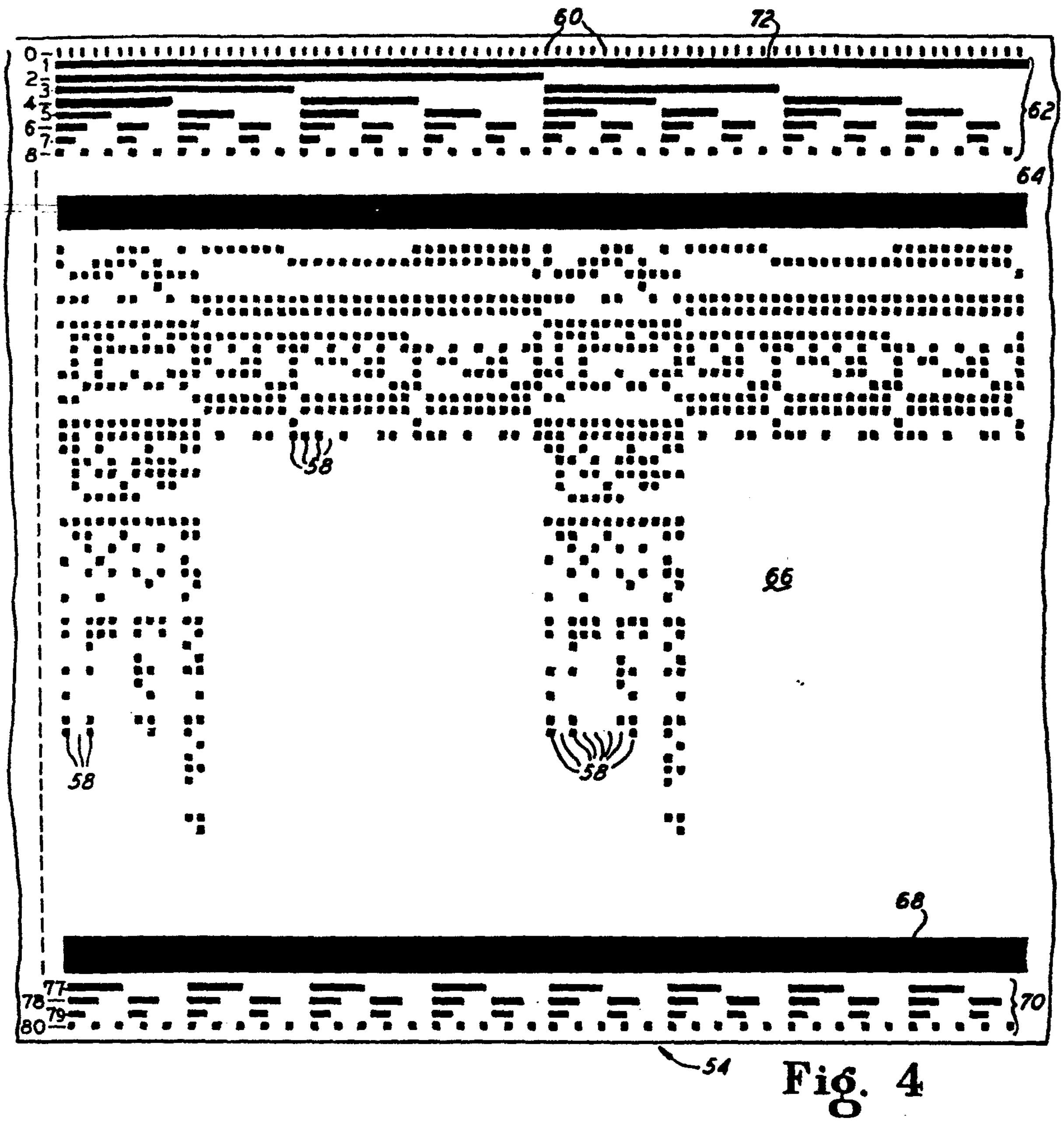


Fig. 4

Fig. 1B

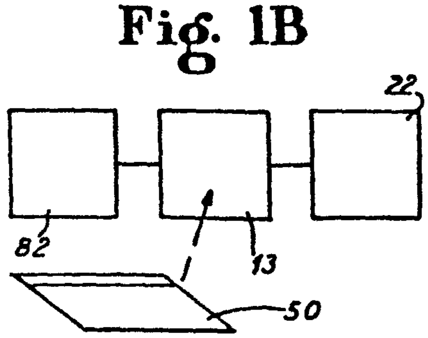


Fig. 1C

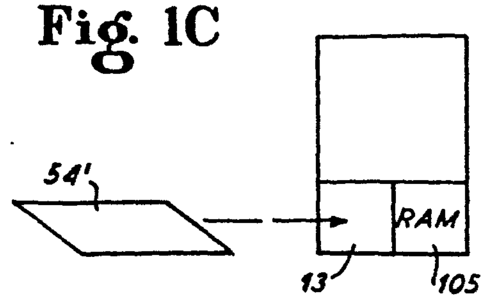

Fig. 2

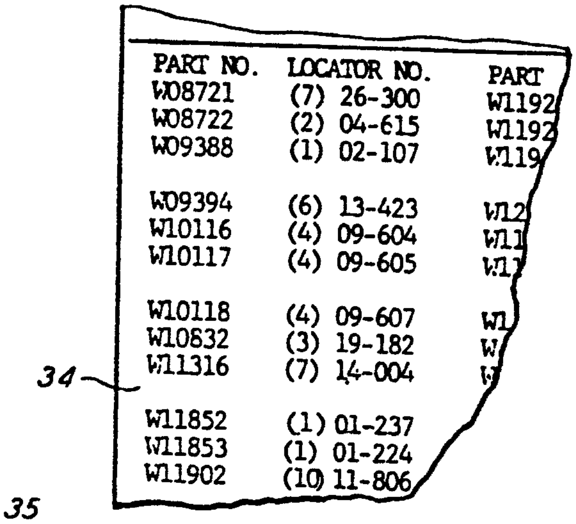


Fig. 3

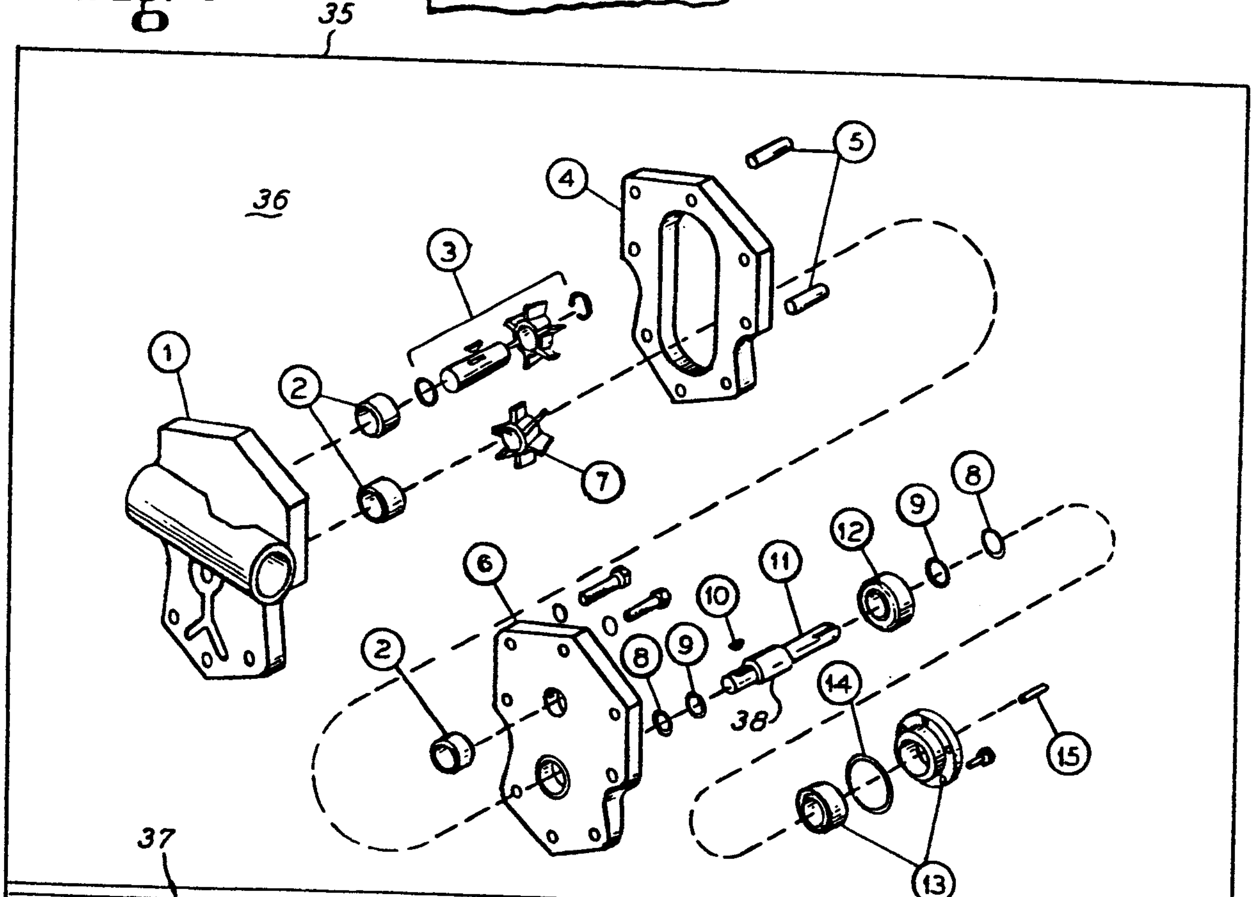


| KEY | PART NO. | DESCRIPTION | LOCATOR NO. |
|---|---|---|---|
| | W 11212 | MOTOR hydraulic drive (2)....... | (1)01-216 |
| 1 | W 18411 | ASSEMBLY-cover w bearings...... | (1)01-217 |
| | 113 -12 | BOLT 4" -20x24" (1)............ | (1)01-218 |
| | 92 4 | WASHER-lock W" (1)............. | (1)01-219 |
| | 113-110 | BOLT-5/16" 18x28" (4).......... | (1)01-220 |
| | 92-5 | WASHER-lock 5/16" (4)..... | (1)01-221 |
| 2 | NSS | Bearing (3).................... | |
| 3 | 14250 | ASSEMBLY-shaft (1)............. | (1) 01-222 |
| | A 26428 | RING-retaining(2).............. | (1) 01-223 |
| | W 11853 | SHAFT (1)...................... | (1) 01-224 |
| | 126 -14 | KEY-Woodruff (1)............... | (1) 01-225 |
| | 14256 | GEAR (1)....................... | (1) 01-226 |
| | A 25423 | RING-retrieving(1)............. | (1) 01-227 |
| 4 | 34452 | PLATE-gear (1)................. | (1) 01-228 |
| 5 | NSS | PIN-dowel (1).................. | |
| 6 | T 22229 | ASSEMBLY-body w.bearing........ | (1) 01-229 |
| | 113 -12 | BOLT-1/2" -20 x 2x" (2)........ | (1) 01-230 |
| | NSS | BEARING (4).................... | |

| KEY | PART NO. | DESCRIPTION | LOCATOR NO. |
|---|---|---|---|
| | 113-122 | BOLT 5/16"-18 x 21".................. | (1) 01-231 |
| | 92 - 5 | WASHER-lock 5/16" (2)................ | (1) 01-232 |
| | NSS | BEARING (4).......................... | |
| 7 | 14257 | GEER-drive (1)....................... | (1) 01-234 |
| 8 | A 26428 | RING-retaining (2)................... | (1) 01-235 |
| 9 | NSS | WASHER (2)........................... | |
| 10 | 126 -14 | KEY-Woodruff (1)..................... | (1) 01-236 |
| 11 | W 11852 | SHAFT-drive (1)...................... | (1) 01-237 |
| 12 | NSS | BEARING-ball (1)..................... | |
| 13 | W 11846 | ASSEMBLY-pilot plate (1)............. | (1) 01-238 |
| | 164 -23 | SCREW-hex socket #10x4 (6)........... | (1) 01-239 |
| 14 | NSS | "O" RING (1) | |
| 15 | F 62223 | KEY-square (1)....................... | (1) 01-260 |
| | W 11847 | KIT-loose parts contains 1-#10-6-92-5 L.W., 6-113-110 bolt, 1-#14-2-92-4 & W. (U.A.R.)................ | (1) 01-241 |

39 40 41 42 43

Fig. 5

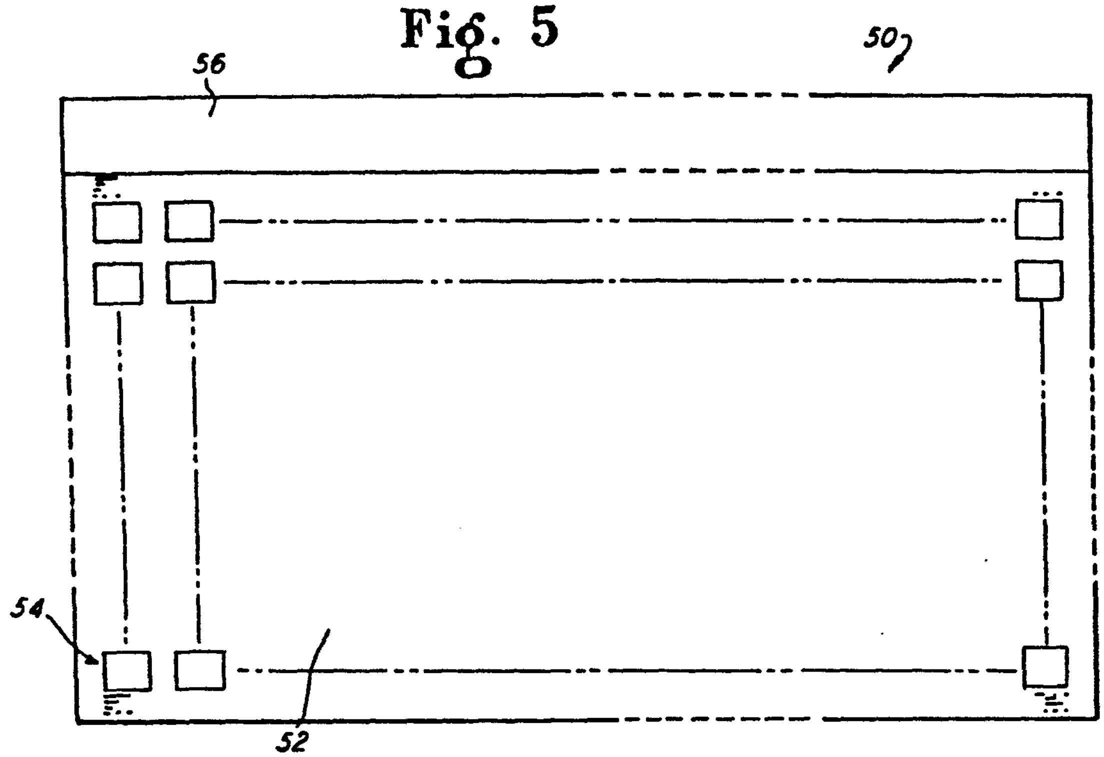


Fig. 6

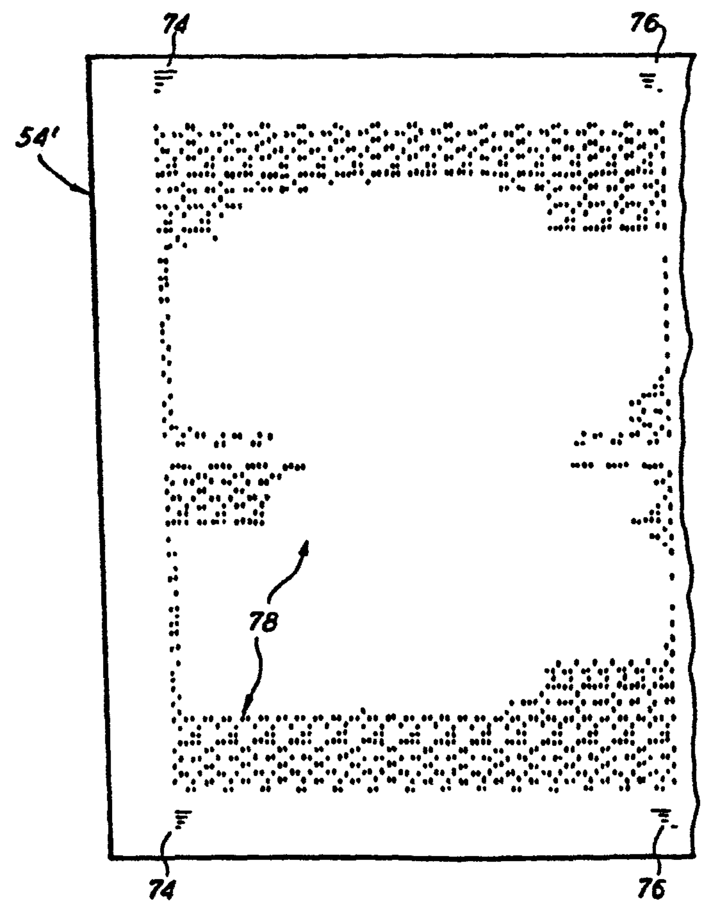

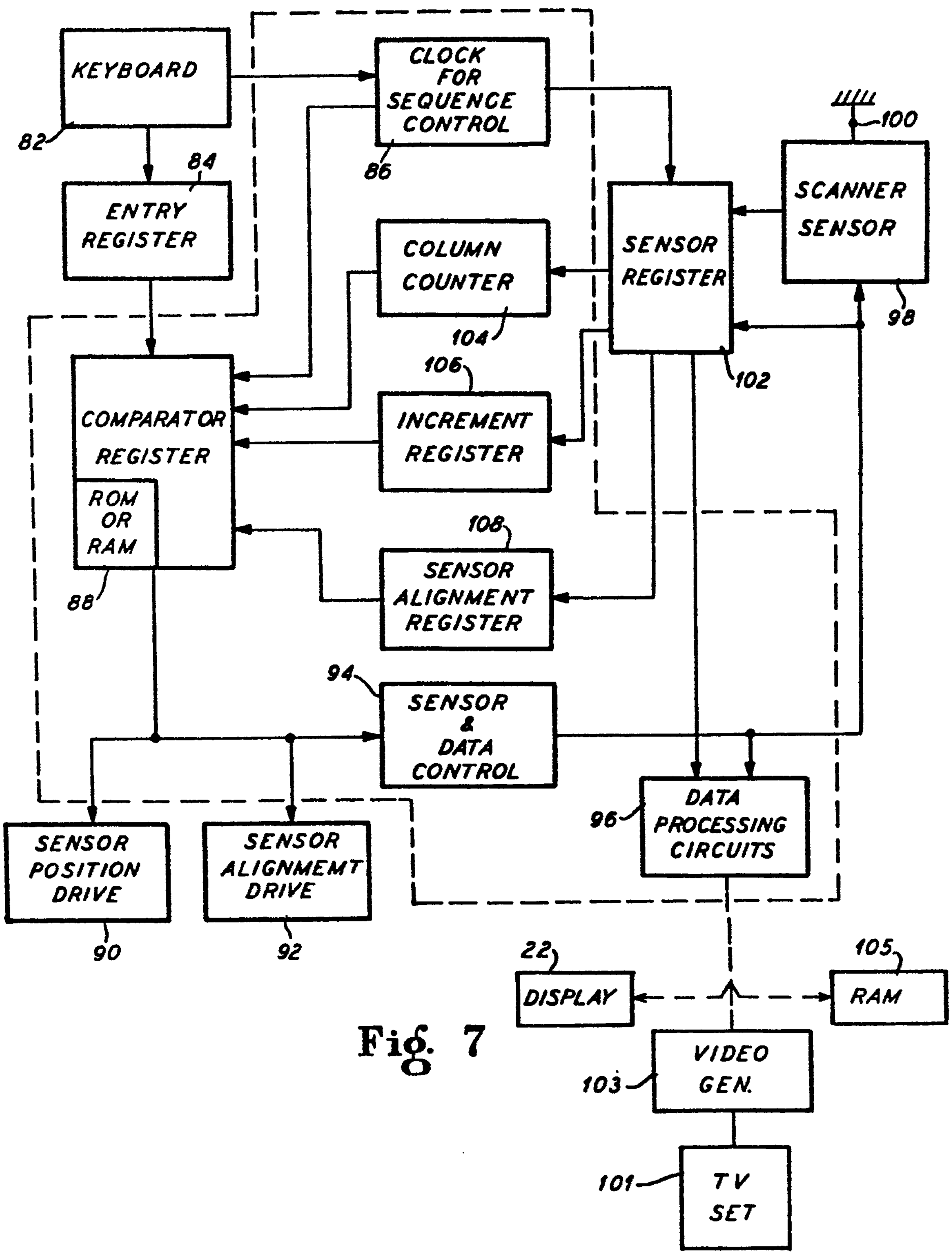
KEYBOARD
82
CLOCK FOR SEQUENCE CONTROL
86
ENTRY REGISTER
84
COLUMN COUNTER
104
SENSOR REGISTER
102
SCANNER SENSOR
98
100
INCREMENT REGISTER
106
COMPARATOR REGISTER
ROM OR RAM
88
SENSOR ALIGNMENT REGISTER
108
SENSOR & DATA CONTROL
94
DATA PROCESSING CIRCUITS
96
SENSOR POSITION DRIVE
90
SENSOR ALIGNMEMT DRIVE
92
DISPLAY
22
RAM
105
VIDEO GEN.
103
TV SET
101

Fig. 7

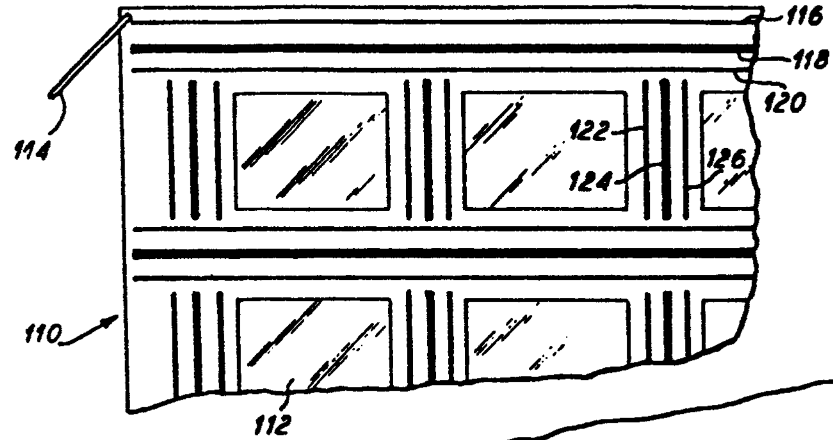


Fig. 8

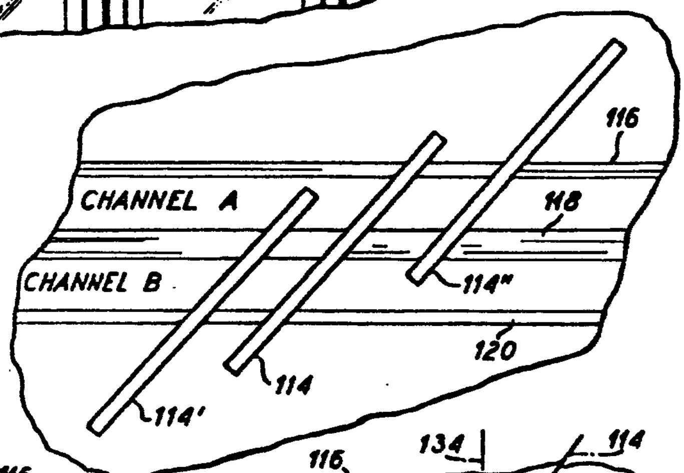


Fig. 9

Fig. 10

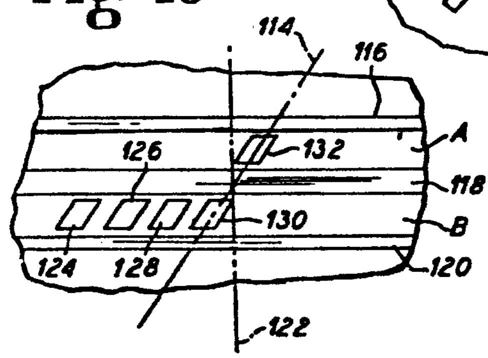


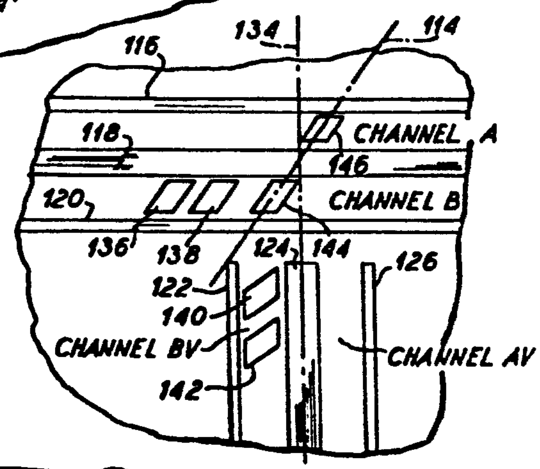


Fig. 11

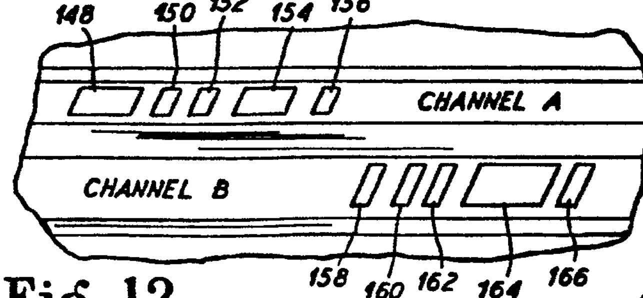


Fig. 12

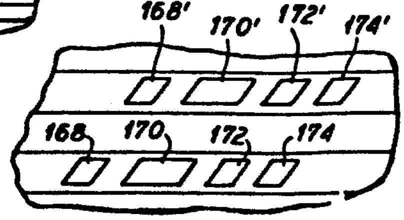


Fig. 13

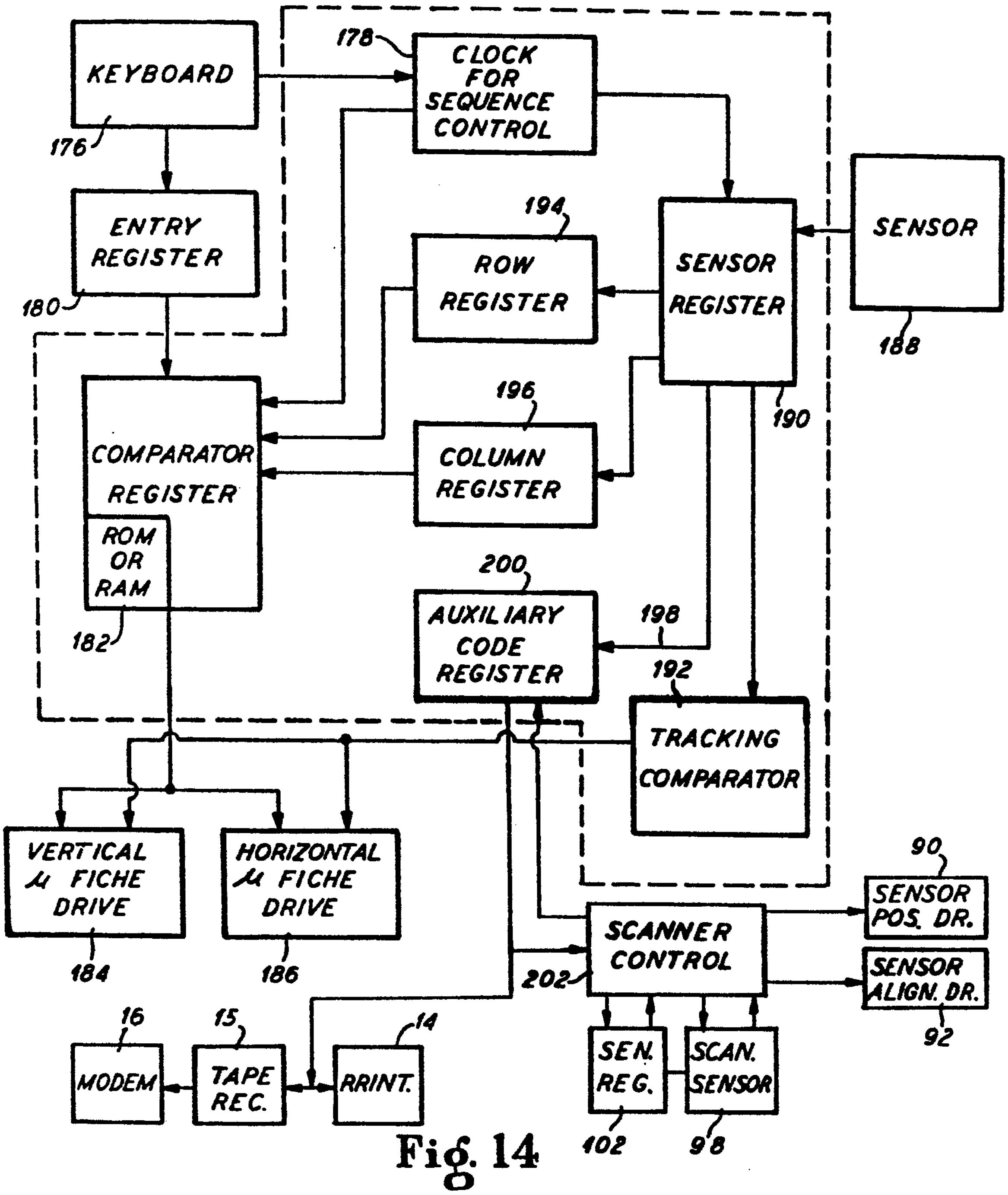
KEYBOARD
176
178
CLOCK FOR SEQUENCE CONTROL
ENTRY REGISTER
180
194
ROW REGISTER
SENSOR REGISTER
SENSOR
188
190
196
COMPARATOR REGISTER
COLUMN REGISTER
ROM OR RAM
182
200
AUXILIARY CODE REGISTER
198
192
TRACKING COMPARATOR
VERTICAL μ FICHE DRIVE
184
HORIZONTAL μ FICHE DRIVE
186
90
SENSOR POS. DR.
SCANNER CONTROL
202
SENSOR ALIGN. DR.
92
16
MODEM
15
TAPE REC.
14
RRINT.
SEN. REG.
102
SCAN. SENSOR
98

Fig. 14

0007660

European Patent Office

# EUROPEAN SEARCH REPORT

Application number

EP 79 200 373.3

## DOCUMENTS CONSIDERED TO BE RELEVANT

| Category | Citation of document with indication, where appropriate, of relevant passages | Relevant to claim |
| --- | --- | --- |
| | US - A - 4 086 469 (TORIUMI et al.)<br>* complete document * | 1,<br>21-26<br>44-47 |
| | US - A - 4 097 846 (LEWIS)<br>* complete document * | 1,<br>5-44 |
| | DE - A - 2 046 860 (IRIA)<br>* complete document * | 1,<br>21-26,<br>44-47 |
| | DE - A1 - 2 647 831 (EMAC)<br>* complete document * | 1,<br>21-26 |
| | DE - A1 - 2 533 938 (SHARP)<br>* complete document * | 1,<br>21-26 |
| | DE - A - 2 151 125 (ADRESSORGRAPH)<br>* complete document * | |

**CLASSIFICATION OF THE APPLICATION (Int. Cl.)**

G 06 K 17/00
G 06 K 19/00
G 06 F 15/20

**TECHNICAL FIELDS SEARCHED (Int.Cl.)**

G 06 F 15/00
G 06 K 17/00
G 06 K 19/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
| --- | --- | --- |
| Berlin | 11-10-1979 | [illegible] |